(19)

Europäisches
Patentamt
European
Patent Office
Office européen
des brevets

(11) **EP 4 412 131 A1**

(12) **EUROPEAN PATENT APPLICATION**
published in accordance with Art. 153(4) EPC

(43) Date of publication:
**07.08.2024 Bulletin 2024/32**

(21) Application number: **22874652.5**

(22) Date of filing: **15.09.2022**

(51) International Patent Classification (IPC):
**H04L 5/00** (2006.01)    **H04W 52/02** (2009.01)

(52) Cooperative Patent Classification (CPC):
**H04L 5/00; H04W 52/02;** Y02D 30/70

(86) International application number:
**PCT/CN2022/119029**

(87) International publication number:
**WO 2023/051265 (06.04.2023 Gazette 2023/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.09.2021 CN 202111166069**

(71) Applicant: **Datang Mobile Communications
Equipment Co., Ltd.
Beijing 100085 (CN)**

(72) Inventors:
• **LUO, Chen
Beijing 100085 (CN)**

• **WANG, Jiaqing
Beijing 100085 (CN)**
• **YANG, Meiying
Beijing 100085 (CN)**
• **SU, Yuwan
Beijing 100085 (CN)**
• **LI, Yaomin
Beijing 100085 (CN)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(54) **METHOD AND APPARATUS FOR DETERMINING PDCCH MONITORING ADAPTIVE BEHAVIOR**

(57)    Embodiments of the present disclosure provide a method and apparatus for determining a PDCCH monitoring adaptive behavior. The method comprises: receiving PDCCH monitoring adaptive indication information sent by a network side device, the PDCCH monitoring adaptive indication information comprising first indication information; and determining a PDCCH monitoring adaptive behavior on the basis of the PDCCH monitoring adaptive indication information. In the method for determining the PDCCH monitoring adaptive behavior provid-ed in the embodiments of the present disclosure, different configurations of the PDCCH monitoring adaptive indication information, the PDCCH monitoring adaptive behavior is determined, such that different PDCCH monitoring behaviors of a terminal device can be flexibly indicated, or a PDCCH monitoring behavior can be switched, thereby saving the monitoring power consumption of the terminal device and ensuring the timely transmission of data.

EP 4 412 131 A1

Receiving indication information for PDCCH monitoring adaptation transmitted from a network side device, where the indication information for PDCCH monitoring adaptation includes first indication information — 101

Determining a PDCCH monitoring adaptation behavior based on the indication information for PDCCH monitoring adaptation — 102

FIG. 1

**Description**

**CROSS-REFERENCE TO RELATED APPLICATION**

The present application claims priority to Chinese patent application No. 202111166069.8 filed on September 30, 2021, entitled "Method and Apparatus for Determining PDCCH Monitoring Adaptive Behavior", which is hereby incorporated by reference in its entirety.

**FIELD**

The present application relates to the field of radio communication, and in particular to methods and apparatuses for determining a physical downlink control channel (PDCCH) monitoring adaptation behavior.

**BACKGROUND**

In a new radio (NR, also known as 5G) system, a terminal device determines whether downlink scheduling information is present by monitoring a physical downlink control channel (PDCCH). The procedure of monitoring the PDCCH is as follows. The terminal device decodes the PDCCH, and then determines whether it is downlink control information (DCI) carrying scheduling information of the terminal device through cyclic redundancy check (CRC).

A base station may allocate one or more search spaces for a user equipment (UE) through higher layer signaling, and configurations of each search space are periodic. The UE performs PDCCH monitoring in a configured search space. A timing when the UE performs PDCCH monitoring is called a PDCCH monitoring occasion. The search spaces are generally configured periodically. In the 5G NR system, in order to obtain downlink scheduling information, UE needs to monitor the PDCCH at each PDCCH monitoring occasion to determine whether there is downlink scheduling information. Each PDCCH monitoring procedure is a PDCCH decoding procedure, and then it is determined whether it is DCI carrying UE scheduling information based on a CRC result. If the PDCCH carries the UE scheduling information, the UE may obtain a positive CRC check, and also obtain the scheduling information carried in the DCI simultaneously; otherwise, the CRC check is negative, and the UE cannot obtain any scheduling information in the DCI.

**SUMMARY**

In view of the problems in the related art, embodiments of the present application provide methods and apparatuses for determining a physical downlink control channel (PDCCH) monitoring adaptation behavior.

An embodiment of the present application provides a method for determining a physical downlink control channel (PDCCH) monitoring adaptation behavior, applied to a terminal device, including:

receiving indication information for PDCCH monitoring adaptation transmitted from a network side device, where the indication information for PDCCH monitoring adaptation includes first indication information; and
determining a PDCCH monitoring adaptation behavior based on the indication information for PDCCH monitoring adaptation,
where the first indication information is any of the following: disabling PDCCH monitoring skipping, skipping PDCCH monitoring for a target time interval, or switching to or staying in a target search space set group (SSSG).

In an embodiment, the PDCCH monitoring adaptation behavior at least includes: disabling PDCCH monitoring skipping, skipping PDCCH monitoring for a target time interval, or switching to or staying in a target SSSG,
where the target time interval is a specific time period, and the target SSSG is a specific SSSG.

In an embodiment, skipping PDCCH monitoring for the target time interval is applied to any of the following scenarios:
a first search space set where the first indication information is associated, a specific search space set, a preconfigured specific SSSG or a currently activated band width part (BWP).

In an embodiment, determining the PDCCH monitoring adaptation behavior based on the indication information for PDCCH monitoring adaptation includes:

in case that the indication information for PDCCH monitoring adaptation also includes second information, determining the PDCCH monitoring adaptation behavior based on the first indication information and the corresponding second information,
where in case that the first indication information is switching to or staying in the target SSSG, the second information is used to indicate that the target SSSG is a specific SSSG; or,

in case that the first indication information is skipping PDCCH monitoring for a target time interval, the second information is used to indicate that the target time interval is a specific time period; or,

in case that the first indication information does not include a configuration of a default SSSG or an initial SSSG, the second information is used to indicate the default SSSG or the initial SSSG; or,

in case that the first indication information cannot indicate disabling PDCCH monitoring skipping, the second information is used to indicate disabling PDCCH monitoring skipping.

In an embodiment, determining the PDCCH monitoring adaptation behavior based on the indication information for PDCCH monitoring adaptation includes:

in case that the indication information for PDCCH monitoring adaptation also includes second information, and PDCCH monitoring skipping associated information and/or SSSG switching associated information has been preconfigured, determining the PDCCH monitoring adaptation behavior based on the preconfigured PDCCH monitoring skipping associated information and/or the SSSG switching associated information, the second information and the first indication information,

where in case that the second information indicates the preconfigured PDCCH monitoring skipping associated information, the first indication information is in one-to-one correspondence with the preconfigured PDCCH monitoring skipping associated information; or,

in case that the second information indicates the preconfigured SSSG switching associated information, the first indication information is in one-to-one correspondence with the preconfigured SSSG switching associated information,

where the preconfigured PDCCH monitoring skipping associated information includes: disabling PDCCH monitoring skipping and/or skipping PDCCH monitoring for a set of target time intervals; and

the preconfigured SSSG switching associated information includes: not performing PDCCH monitoring in the SSSG and/or switching to or staying in a set of target SSSGs.

In an embodiment, in case that the second information is used to indicate that the target SSSG is the specific SSSG, or in case that the second information is used to indicate that the target time interval is the specific time period, the second information is carried in one or a combination of downlink control information (DCI) signaling, media access control (MAC) layer signaling or radio resource control (RRC) signaling.

In an embodiment, the second information carried in a downlink signaling includes one or a combination of the following:

additional or specific bit information in the DCI signaling or the MAC signaling or the RRC signaling indicates specific SSSG associated information or PDCCH monitoring skipping associated information; or,

a redefinition of a current information field in the DCI signaling is used for indicating specific SSSG associated information or PDCCH monitoring skipping associated information,

where the SSSG switching associated information includes any of the following: not performing PDCCH monitoring in the SSSG, or switching to or staying in any SSSG in a set of target SSSGs, where the target SSSGs are different SSSGs; and

the PDCCH monitoring skipping associated information includes any of the following: disabling PDCCH monitoring skipping, skipping PDCCH monitoring for any time period in a set of target time intervals, where the target time intervals are different time periods.

In an embodiment, in case that the first indication information does not include the configuration of the default SSSG or the initial SSSG, and the second information is used to indicate the default SSSG or the initial SSSG, determining the PDCCH monitoring adaptation behavior based on the first indication information and the corresponding second information includes:

determining to switch to or stay in the default SSSG or the initial SSSG based on the first indication information and the corresponding second information.

In an embodiment, in case that the first indication information cannot indicate disabling PDCCH monitoring skipping, and the second information is used to indicate disabling PDCCH monitoring skipping, determining the PDCCH monitoring adaptation behavior based on the first indication information and the corresponding second information includes:

determining disabling PDCCH monitoring skipping based on the first indication information and the corresponding second information.

In an embodiment, the second information is used to indicate the default SSSG or the initial SSSG, or the second information is used to indicate disabling PDCCH monitoring skipping, and implementation mode includes one or a combination of the following:
a scheduling data field in downlink signaling is a specific configuration, additional or specific bit information in downlink signaling is target configuration information, or a redefinition indication of a current information field in downlink signaling.

In an embodiment, determining the PDCCH monitoring adaptation behavior based on the indication information for PDCCH monitoring adaptation includes:

in case that the target SSSG has been preconfigured to be a specific SSSG, determining to switch to or stay in the target SSSG based on the first indication information, where the target SSSG is a preconfigured specific SSSG; and
in case that a target time interval for which the PDCCH monitoring is skipped has been preconfigured to be a first time interval, determining that a specific time period of the target time interval for which the PDCCH monitoring is skipped is a preconfigured first time interval based on the first indication information.

In an embodiment, in case that the second information is an association capability of the terminal device with respect to PDCCH monitoring adaptation or preference information of the terminal device, the first indication information is configured based on the second information.

In an embodiment, the first indication information is configured based on the second information through any one or a combination of the following modes:

in case that the second information is only supporting PDCCH monitoring skipping, the first indication information is a behavior indication associated with PDCCH monitoring skipping; or,
in case that the second information is SSSG switching other than Rel-16 SSSG switching, the first indication information is a behavior indication associated with SSSG switching; or,
in case that the second information is supporting PDCCH monitoring skipping and Rel-16 SSSG switching, the first indication information is a joint indication for both PDCCH monitoring skipping and SSSG switching,
where the Rel-16 SSSG switching includes switching to or staying in SSSG0, and switching to or staying in SSSG1.

An embodiment of the present application further provides a method for determining a physical downlink control channel (PDCCH) monitoring adaptation behavior, applied to a network side device, including:

transmitting indication information for PDCCH monitoring adaptation, where the indication information for PDCCH monitoring adaptation includes first indication information,
where the first indication information is any of the following: disabling PDCCH monitoring skipping, skipping PDCCH monitoring for a target time interval, or switching to or staying in a target search space set group (SSSG), and the first indication information is used to determine a PDCCH monitoring adaptation behavior.

In an embodiment, the PDCCH monitoring adaptation behavior at least includes: disabling PDCCH monitoring skipping, skipping PDCCH monitoring for a target time interval, or switching to or staying in a target SSSG,
where the target time interval is a specific time period, and the target SSSG is a specific SSSG.

In an embodiment, the indication information for PDCCH monitoring adaptation also includes second information, and the first indication information and the second information have the following corresponding relationships:

in case that the first indication information is switching to or staying in the target SSSG, the second information is used to indicate that the target SSSG is a specific SSSG; or,
in case that the first indication information is skipping PDCCH monitoring for the target time interval, the second information is used to indicate that the target time interval is a specific time period; or,
in case that the first indication information does not include a configuration of a default SSSG or an initial SSSG, the second information is used to indicate the default SSSG or the initial SSSG; or,
in case that the first indication information cannot indicate disabling PDCCH monitoring skipping, the second information is used to indicate disabling PDCCH monitoring skipping,
where the first indication information and the corresponding second information are used to determine the PDCCH monitoring adaptation behavior.

In an embodiment, the method further includes:
determining a configuration of the first indication information based on an association capability of a terminal device with respect to PDCCH monitoring adaptation or preference information of a terminal device configured in the second information.

In an embodiment, a mode for determining the configuration of the first indication information based on the association capability of the terminal device with respect to PDCCH monitoring adaptation or the preference information of the terminal device configured in the second information includes one or a combination of the following:

in case that the second information is only supporting PDCCH monitoring skipping, the first indication information is a behavior indication associated with PDCCH monitoring skipping; or,

in case that the second information is SSSG switching other than Rel-16 SSSG switching, the first indication information is a behavior indication associated with SSSG switching; or,

in case that the second information is supporting PDCCH monitoring skipping and Rel-16 SSSG switching, the first indication information is a joint indication for both PDCCH monitoring skipping and SSSG switching,

where the Rel-16 SSSG switching includes switching to or staying in SSSG0, and switching to or staying in SSSG1.

In an embodiment, transmitting the indication information for PDCCH monitoring adaptation including the first indication information includes:

in case that the indication information for PDCCH monitoring adaptation also includes second information, and PDCCH monitoring skipping associated information and/or SSSG switching associated information has been preconfigured, the preconfigured PDCCH monitoring skipping associated information and/or the SSSG switching associated information, the second information and the first indication information have the following corresponding relationships:

in case that the second information indicates the preconfigured PDCCH monitoring skipping associated information, the first indication information is in one-to-one correspondence with the preconfigured PDCCH monitoring skipping associated information; or,

in case that the second information indicates the preconfigured SSSG switching associated information, the first indication information is in one-to-one correspondence with the preconfigured SSSG switching associated information,

where the preconfigured PDCCH monitoring skipping associated information includes: disabling PDCCH monitoring skipping and/or skipping PDCCH monitoring for a set of target time intervals; and

the preconfigured SSSG switching associated information includes: not performing PDCCH monitoring in the SSSG and/or switching to or staying in a set of target SSSGs.

An embodiment of the present application further provides a terminal electronic device, including a memory, a processor and a transceiver,

where the memory is used to store a computer program, the transceiver is used to transmit and receive data under control of the processor, and the processor is used to execute the computer program stored in the memory and perform steps of the method for determining a physical downlink control channel (PDCCH) monitoring adaptation behavior applied to the terminal device.

An embodiment of the present application further provides a network side electronic device, including a memory, a transceiver and a processor,

where the memory is used to store a computer program, the transceiver is used to transmit and receive data under control of the processor, and the processor is used to execute the computer program stored in the memory and perform steps of the method for determining a physical downlink control channel (PDCCH) monitoring adaptation behavior applied to the network side device.

An embodiment of the present application further provides a terminal apparatus for determining a physical downlink control channel (PDCCH) monitoring adaptation behavior, including:

a receiving module, used for receiving indication information for PDCCH monitoring adaptation transmitted from a network side device, where the indication information for PDCCH monitoring adaptation includes first indication information; and

a determining module, used for determining a PDCCH monitoring adaptation behavior based on the indication information for PDCCH monitoring adaptation,

where the first indication information is any of the following: disabling PDCCH monitoring skipping, skipping PDCCH monitoring for a target time interval, or switching to or staying in a target search space set group (SSSG).

An embodiment of the present application further provides a network side apparatus for determining a physical downlink control channel (PDCCH) monitoring adaptation behavior, including:

a transmitting module, used for transmitting indication information for PDCCH monitoring adaptation, where the indication information for PDCCH monitoring adaptation includes first indication information,

where the first indication information is any of the following: disabling PDCCH monitoring skipping, skipping PDCCH monitoring for a target time interval, or switching to or staying in a target search space set group (SSSG), and the first indication information is used to determine a PDCCH monitoring adaptation behavior.

An embodiment of the present application further provides a processor-readable storage medium, where the processor-readable storage medium stores a computer program, the computer program, when executed by a processor, is used to cause the processor to perform steps of the methods for determining a physical downlink control channel (PDCCH) monitoring adaptation behavior described above.

In the methods and apparatuses for determining the PDCCH monitoring adaptation behavior provided by embodiments of the present application, the PDCCH monitoring adaptation behavior is determined based on different configurations of the indication information for PDCCH monitoring adaptation, and different PDCCH monitoring behaviors of the terminal device may be flexibly indicated, or PDCCH monitoring behaviors are flexibly switched, to save monitoring power consumption of the terminal device and ensure timely transmission of data.

BRIEF DESCRIPTION OF THE DRAWINGS

In order to clearly illustrate the solutions disclosed in the embodiments of the present application, the drawings used in the descriptions of the embodiments are briefly described below. The drawings in the following description are only some embodiments of the present application, and other drawings may be obtained according to these drawings without creative work for those skilled in the art.

FIG. 1 is a first schematic flowchart of a method for determining a physical downlink control channel (PDCCH) monitoring adaptation behavior according to an embodiment of the present application;
FIG. 2 is a second schematic flowchart of a method for determining a physical downlink control channel (PDCCH) monitoring adaptation behavior according to an embodiment of the present application;
FIG. 3 is a schematic structural diagram of a terminal electronic device according to an embodiment of the present application;
FIG. 4 is a schematic structural diagram of a network side electronic device according to an embodiment of the present application;
FIG. 5 is a schematic structural diagram of a terminal apparatus for determining a physical downlink control channel (PDCCH) monitoring adaptation behavior according to an embodiment of the present application; and
FIG. 6 is a schematic structural diagram of a network side apparatus for determining a physical downlink control channel (PDCCH) monitoring adaptation behavior according to an embodiment of the present application.

DETAILED DESCRIPTION

In embodiments of the present application, the term "and/or" describes an association relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more than two, and other quantifiers are similar to it.

The solutions in the embodiments of the present application are clearly and completely described in the following in conjunction with the accompanying drawings in the embodiments of the present application. These embodiments are a part of the embodiments of the present application, and not all of the embodiments. All other embodiments obtained by a person of ordinary skill in the art based on the embodiments of the present application without creative work are within the scope of the present application.

In order to help understand the solutions in the embodiments of the present application, some concepts that may be involved in the present application are briefly introduced below.

1) Physical downlink control channel (PDCCH) monitoring adaptation behavior, at least includes one or a combination of the following behaviors:

behavior 1: PDCCH monitoring skipping is not activated, that is, PDCCH monitoring is performed based on a preconfigured search space;
behavior 1A: PDCCH monitoring skipping, that is, PDCCH monitoring is stopped within a time period X, where X is a value greater than or equal to 0;
behavior 2: monitoring a search space set associated with SSSG#0;
behavior 2A: monitoring a search space set associated with SSSG#1; or,
behavior 2B: monitoring a search space set associated with SSSG#2.

2) PDCCH monitoring.

A base station may allocate one or more search spaces for a user equipment (UE) through higher layer signaling, and configurations of each search space are periodic. The UE performs PDCCH monitoring in a configured search space. A timing when the UE performs PDCCH monitoring is called a PDCCH monitoring occasion. The search spaces are generally configured periodically. In the 5G NR system, in order to obtain downlink scheduling information, UE needs to monitor the PDCCH at each PDCCH monitoring occasion to determine whether there is downlink scheduling information. Each PDCCH monitoring procedure is a PDCCH decoding procedure, and then it is determined whether it is DCI carrying UE scheduling information based on a CRC result. If the PDCCH carries the UE scheduling information, the UE may obtain a positive CRC check, and also obtain the scheduling information carried in the DCI simultaneously; otherwise, the CRC check is negative, and the UE cannot obtain any scheduling information in the DCI.
Search space parameter configurations for the PDCCH are as follows.

1. An index of a search space set, that is, a search space ID.
2. A control resource set (CORESET) number for establishing a relationship between a search space s and a control resource set *p*, that is, CORESET ID.
3. *MonitoringSlotPeriodicityAndOffset*, which indicates a PDCCH monitoring periodicity $k_s$ and an offset $o_s$, units of which are slots. The terminal determines a slot for monitoring a downlink control channel based on this configuration parameter.
4. *MonitoringSymbolsWithinSlot,* which indicates a monitoring pattern of PDCCH in a slot and indicates a location of a first symbol of CORESET in a slot.
5. A monitoring duration, which indicates the number of slots $T_s$ occupied by the search space set s, where $T_s < k_s$.
6. The number of PDCCH candidates $M_s^{(L)}$ included in each aggregation level L in the search space. Supported aggregation levels include {1, 2, 4, 8, 16}, and are configured through an independent parameter.
7. A flag *searchspaceType*, which is used to distinguish whether a current search space is a common search space (CSS) or a UE-specific search space (USS).
8. For a CSS set, it is indicated by a specific DCI format.
9. For a USS set, it is indicated by a specific DCI format.
10. *FreqMonitorLocations*. A bit mapping indicates an index of one or more resource block (RB) sets where the search space is located. Each "1" in the bit mapping indicates an RB set *k*, the starting position is $N_{\text{RB}}^{\text{offset}}$, where $RB_{s0+k,\text{DL}}^{\text{start},\mu}$ represents an index of a starting RB of the RB set *k*, and $N_{\text{RB}}^{\text{offset}}$ is an offset of the RB. A frequency domain resource allocation pattern is determined based on a CORESET configuration associated with the search space.

3) Search space switching procedure

A UE capability indicates whether the UE supports at least one of the two search space set switching modes: *searchSpaceSetGroupSwitchingwithoutDCI-r16* and/or *searchSpaceSetGroupSwitchingwithDCI-r16*. If gNB configures *searchSpaceGroupIdList-r16* for the UE based on the UE capability to indicate in which serving cell(s) the search space set switching procedure is performed, the UE performs the search space set switching procedure. Otherwise, the UE does not perform the search space set switching procedure. If the UE is configured with *searchSpaceGroupIdList-r16* and also *searchSpaceGroupIDList-r16* indicating the corresponding search space set group, the UE reconfigures a search set based on search space set group 0 (SSSGO) and performs corresponding PDCCH monitoring.
Search space set grouping is only for Type-3 common search space (Type-3 CSS) and USS set. When the search space set is not configured with a search space set group index, the terminal needs to monitor the search space set continuously.
The search space set switching is indicated explicitly or implicitly, which is distinguished by whether RRC signaling is configured with *SearchSpaceSwitchTrigger-r16*. If it is configured, it is indicated explicitly; otherwise, it is indicated implicitly.
For explicit indication, the switching between SSSGO and SSSG1 is triggered through the search space set switching trigger indication in DCI format 2_0. In addition, the base station may configure *searchSpaceSwitchingTimer-r16* through the RRC signaling. When countdown of the timer expires, or after a last symbol of remaining channel occupancy duration carried in the search space of DCI format 2_0 configured for the UE, the UE will fall back to monitoring of a default search space set group, where SSSGO is the default search space set group. *SearchSpaceSwitchingTimer-*

*r16* is started when the UE switches to SSSG1. When the UE switches between SSSG0 and SSSG1, there may be a delay. It is divided into capability 1 and capability 2 based on UE capabilities, and is configured by gNB through higher layer signaling based on the UE capabilities.

Table 1 Minimum value of switching delay $P_{switch}$ [symbol]

| $\mu$ | UE processing capability 1 [symbol] | UE processing capability 2 [symbol] |
|---|---|---|
| 0 | 25 | 10 |
| 1 | 25 | 12 |
| 2 | 25 | 22 |

For implicit indication, the search space set switching is triggered by whether the UE monitors a DCI format of the corresponding search space set group. If the UE monitors the DCI configured in the SSSG0, the UE starts PDCCH monitoring configured in SSSG1, and stops PDCCH monitoring in SSSG0. When any DCI in SSSG1 is monitored, *searchSpaceSwitchingTimer-r16* is started. When countdown of the timer expires, or after a last symbol of remaining channel occupancy duration carried in the search space of DCI format 2_0 configured for the UE, the UE falls back to SSSG0 from SSSG1. Like the explicit indication, there may be a delay when switching between SSSG0 and SSSG1. It is divided into capability 1 and capability 2 based on UE capabilities, and is configured by gNB through higher layer signaling based on the UE capabilities.

4) Discussion on standardization of PDCCH monitoring adaptation enhancement in a connected state.

A third search space set group SSSG#2 is additionally introduced in SSSG switching, to further save energy for a terminal in the connected state. For example, SSSG#2 is set as a dormant group, or no search space set is associated with SSSG#2, and then PDCCH monitoring behavior of the terminal is reduced by SSSG switching to SSSG2.

In addition, SSSG switching specified in the Rel-16 protocol is notified through a group message, which is not applicable to UE-specific indication. In conclusion of radio access network (RAN) 1#105e conference, PDCCH monitoring adaptation indication is carried in scheduling DCI, and this DCI is a UE-specific indication.

Since both PDCCH monitoring skipping and SSSG switching have their own advantages, that is, PDCCH monitoring skipping may dynamically and flexibly indicate the terminal to perform PDCCH monitoring, and SSSG switching may indicate the terminal to perform PDCCH monitoring in different search space sets, both of them may indicate cooperatively, that is, the terminal may be indicated to perform different PDCCH monitoring adaptation behaviors based on different situations. For PDCCH monitoring skipping behavior, if PDCCH monitoring skipping needs to dynamically indicate different monitoring skipping time intervals, the PDCCH monitoring adaptation indication is not enough to indicate these two different types of PDCCH adaptation behaviors.

In the present application, the terminal may quickly receive the PDCCH through search space set switching when the base station preempts an unlicensed frequency band. Normally, the UE monitors the PDCCH more frequently before channel occupation time, and the PDCCH may be quickly monitored. That is, once the base station preempts the unlicensed frequency band, the UE may start data transmission as soon as possible. When the terminal is in the channel occupation time, the PDCCH monitoring periodicity is relatively large, and the terminal may reduce blind detection to a certain extent and achieve terminal energy saving.

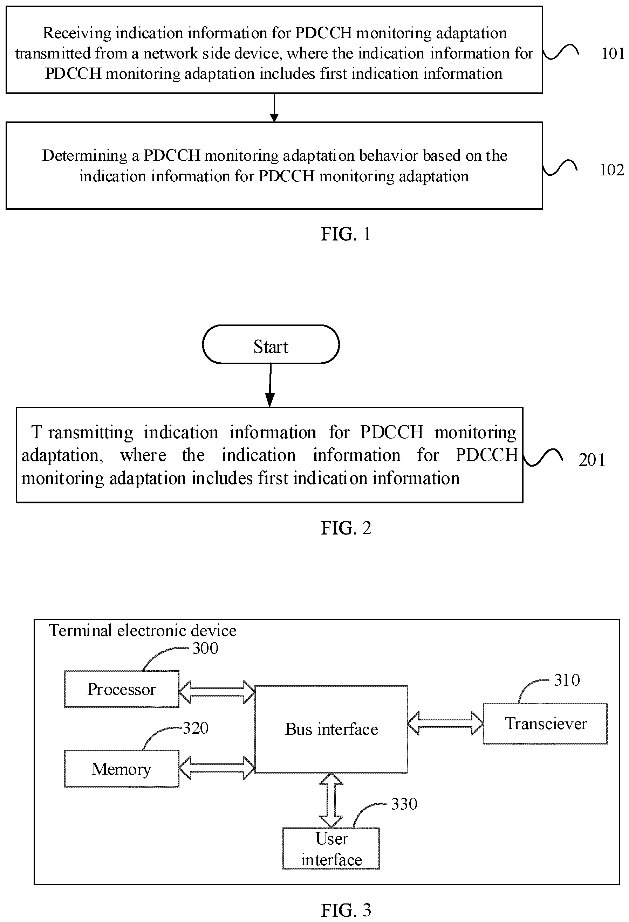

FIG. 1 is a first schematic flowchart of a method for determining a PDCCH monitoring adaptation behavior according to an embodiment of the present application. As shown in FIG. 1, an embodiment of the present application provides a method for determining a PDCCH monitoring adaptation behavior, whose execution subject may be a terminal device, such as a mobile phone, etc. The method includes the following steps.

Step 101: receiving indication information for PDCCH monitoring adaptation transmitted from a network side device, where the indication information for PDCCH monitoring adaptation includes first indication information.

Step 102: determining a PDCCH monitoring adaptation behavior based on the indication information for PDCCH monitoring adaptation.

The first indication information is any of the following: disabling PDCCH monitoring skipping, skipping PDCCH monitoring for a target time interval, or switching to or staying in a target search space set group (SSSG).

In an embodiment, the terminal device receives the indication information for PDCCH monitoring adaptation transmitted from the network side device, which includes the first indication information. The first indication information is any one of {disabling PDCCH monitoring skipping, skipping PDCCH monitoring for a target time interval, or switching to or staying in a target SSSG}.

Disabling PDCCH monitoring skipping represents performing normal or conventional PDCCH monitoring based on a preconfigured search space and/or skipping PDCCH monitoring for a target time interval being zero.

Skipping PDCCH monitoring for the target time interval, includes two situations:

if no specific time interval is given, it represents a behavior of skipping PDCCH monitoring for the target time interval, the specific time interval is uncertain, and there may be one or more combinations; and

if a specific time interval is given, it represents any one or combination of a set {skipping PDCCH monitoring for target time interval 1, ..., skipping PDCCH monitoring for target time interval N}, where N represents the number of target time intervals, the value of N is greater than or equal to 1, and the value of the target time interval is greater than or equal to 0.

Similarly, switching to or staying in the target SSSG may include the following indication information:

1: switching to or staying in the target SSSG does not indicate a specific SSSG, it represents a behavior of switching to or staying in the target SSSG, and the target SSSG is an uncertain SSSG; and

2: switching to or staying in the target SSSG indicates a specific SSSG, it represents any one or combination of a set {switching to or staying in a target SSSG0, ..., switching to or staying in a target SSSGM}, where M represents an index value of the target SSSG, and the value of M is greater than or equal to 0.

The terminal device receives the above-mentioned first indication information and determines the PDCCH monitoring adaptation behavior of the terminal device, such as performing PDCCH monitoring based on a search space configuration, or skipping PDCCH monitoring for a certain time period, or performing PDCCH monitoring in a specific SSSG, or performing SSSG switching.

In the method for determining the PDCCH monitoring adaptation behavior provided by the embodiment of the present application, the PDCCH monitoring adaptation behavior is determined based on different configurations of the indication information for PDCCH monitoring adaptation, and different PDCCH monitoring behaviors of the terminal device may be flexibly indicated, or PDCCH monitoring behaviors are switched, to save monitoring power consumption of the terminal device and ensure timely transmission of data.

In an embodiment, the PDCCH monitoring adaptation behavior at least includes: disabling PDCCH monitoring skipping, skipping PDCCH monitoring for a specific time period of the target time interval, or switching to or staying in a specific SSSG of the target SSSG set.

In an embodiment, based on different indication information for PDCCH monitoring adaptation, the determined PDCCH monitoring adaptation behaviors at least include:

disabling PDCCH monitoring skipping, that is, the terminal device performs normal or conventional PDCCH monitoring;

skipping PDCCH monitoring for a specific time period of the target time interval, that is, the terminal device does not perform PDCCH monitoring during the specific time period;

switching to or staying in a target SSSG, where the target SSSG is a specific SSSG, which indicates two situations:

situation 1: the terminal device switches to the specific SSSG and performs PDCCH monitoring based on a monitoring occasion configured in the specific SSSG, where the specific SSSG is different from an SSSG originally configured for the terminal device; and

situation 2: the terminal device stays in the specific SSSG and performs PDCCH monitoring based on the monitoring occasion configured in the specific SSSG, where the specific SSSG is the same as the SSSG originally configured for the terminal device.

In the method for determining the PDCCH monitoring adaptation behavior provided by the embodiment of the present application, the PDCCH monitoring adaptation behavior is determined based on different configurations of the indication information for PDCCH monitoring adaptation, and different PDCCH monitoring behaviors of the terminal device may be flexibly indicated, or PDCCH monitoring behaviors are switched, to save monitoring power consumption of the terminal device and ensure timely transmission of data.

In an embodiment, skipping the PDCCH monitoring for the target time interval is applied to any of the following scenarios:

a first search space set where the first indication information is associated, a specific search space set, a preconfigured specific SSSG or a currently activated band width part (BWP).

In an embodiment, the PDCCH monitoring skipping adaptation may be applied to any one or several of the following specific scenarios.

The 2 bits first indication information, and the base station and the terminal supporting up to 3 SSSGs are taken as an example. {00, 01, 10, 11} correspond to {disabling PDCCH monitoring skipping, skipping PDCCH monitoring for target time interval 1, skipping PDCCH monitoring for target time interval 2, switching to or staying in a target SSSG}, respectively.

The PDCCH monitoring skipping behavior in the first indication information is only applied to a search space set where the first indication information is associated or a specific search space set, that is, a first search space set corresponding to signaling carrying the first indication information or the specific search space set. The specific search space set may be specified through higher layer signaling or protocols. When the first indication information transmitted from the network side device, such as the base station, is "01" or "10", it indicates the terminal not to perform PDCCH monitoring in the above corresponding search space set, and the skipping time is the target time interval 1 or the target time interval 2 respectively. For example, when the first indication information transmitted from the base station is "11", the terminal is indicated to only monitor PDCCH on the target SSSG, and monitor the PDCCH based on a search space configuration for the SSSG. The target SSSG may be SSSG0, SSSG1, or SSSG2, which is preconfigured by higher layer signaling or specified by the protocol.

The PDCCH monitoring skipping behavior in the first indication information may be applied to a certain configured SSSG, such as a current SSSG or a SSSG associated with monitoring skipping specified by the protocol, that is, all or part of the search space set in the SSSG needs to skip a time interval correspondingly based on the first indication information. Skipping PDCCH monitoring for different target time intervals N in the first indication information may be applied to the same SSSG, or may be applied to different SSSGs respectively. For example: skipping PDCCH monitoring for the target time interval 1 or skipping PDCCH monitoring for the target time interval 2 is only used for at least one of SSSG0, SSSG1, or SSSG2. The target SSSG may be SSSG0, SSSG1, or SSSG2, which is specifically preconfigured by higher layer signaling or specified by the protocol. When the first indication information transmitted from the network side device, such as the base station, is "01" or "10", it indicates the terminal to disable PDCCH monitoring skipping on the specific SSSG, and the skipping time is the target time interval 1 or the target time interval 2 respectively. If the first indication information transmitted from the base station is "11", the terminal is indicated to only perform PDCCH monitoring on the target SSSG, and monitor the PDCCH based on a search space configuration for the SSSG. The target SSSG may be SSSG0, SSSG1, or SSSG2, which is preconfigured by higher layer signaling or specified by the protocol.

The PDCCH monitoring skipping behavior in the first indication information may be applied to a currently activated BWP, that is, all designated PDCCHs configured on the currently activated BWP. PDCCH on type 3 common search space or UE-specific search space is taken as an example, all will skip PDCCH monitoring for a target time interval. When the first indication information transmitted from the base station is "01" or "10", it indicates the terminal not to perform PDCCH monitoring on the currently activated BWP, and the skipping time is the target time interval 1 or the target time interval 2 respectively. If the first indication information transmitted from the base station is "11", the terminal is indicated to only perform PDCCH monitoring on the target SSSG, and monitor the PDCCH based on a search space configuration for the SSSG. The target SSSG may be SSSG0, SSSG1, or SSSG2, which is preconfigured by higher layer signaling or specified by the protocol.

In the method for determining the PDCCH monitoring adaptation behavior provided by the embodiment of the present application, the PDCCH monitoring adaptation behaviors are determined based on different configurations of the indication information for PDCCH monitoring adaptation, and different PDCCH monitoring behaviors of the terminal device may be flexibly indicated, or PDCCH monitoring behaviors are flexibly switched, to save monitoring power consumption of the terminal device and ensure timely transmission of data.

In an embodiment, determining the PDCCH monitoring adaptation behavior based on the indication information for PDCCH monitoring adaptation includes:

in case that the indication information for PDCCH monitoring adaptation also includes second information, determining the PDCCH monitoring adaptation behavior based on the first indication information and the corresponding second information,
where in case that the first indication information is switching to or staying in a target SSSG, the second information is used to indicate that the target SSSG is a specific SSSG; or,
in case that the first indication information is skipping PDCCH monitoring for the target time interval, the second information is used to indicate that the target time interval is a specific time period; or,
in case that the first indication information does not include a configuration of a default SSSG or an initial SSSG, the second information is used to indicate the default SSSG or the initial SSSG; or,
in case that the first indication information cannot indicate disabling PDCCH monitoring skipping, the second information is used to indicate disabling PDCCH monitoring skipping.

In an embodiment, the received indication information for PDCCH monitoring adaptation transmitted from the network side device may also include second information other than the above-mentioned first indication information. The second information is used to assist in indicating a specific PDCCH monitoring adaptation behavior of the terminal device. For example, when the target time interval in the first indication information is uncertain, or the target SSSG is uncertain, or there is no association configuration of returning to a normal PDCCH monitoring state (that is, disabling PDCCH monitoring skipping, and/or performing PDCCH monitoring on a configured default SSSG or an initial SSSG), the second information may indicate which specific time interval, or which specific SSSG, or indicate the configuration of returning to the normal or conventional PDCCH monitoring state (the configured default SSSG or the initial SSSG, and/or disabling PDCCH monitoring skipping).

The specific configuration of the above-mentioned first indication information and second information is as follows:

in case that the first indication information is switching to or staying in a target SSSG, the second information is used to indicate that the target SSSG is a specific SSSG; or,

in case that the first indication information is skipping PDCCH monitoring for the target time interval, the second information is used to indicate that the target time interval is a specific time period; or,

in case that the first indication information does not include a configuration of a default SSSG or an initial SSSG, the second information is used to indicate the default SSSG or the initial SSSG; or,

in case that the first indication information cannot indicate disabling PDCCH monitoring skipping, the second information is used to indicate disabling PDCCH monitoring skipping.

In the method for determining the PDCCH monitoring adaptation behavior provided by the embodiment of the present application, by combining the first indication information with the second information in the indication information for PDCCH monitoring adaptation, different indication information is configured, the PDCCH monitoring adaptation behaviors are determined, and different PDCCH monitoring behaviors of the terminal device may be flexibly indicated, or PDCCH monitoring behaviors are switched, to save monitoring power consumption of the terminal device and ensure timely transmission of data.

In an embodiment, determining the PDCCH monitoring adaptation behavior based on the indication information for PDCCH monitoring adaptation includes:

in case that the indication information for PDCCH monitoring adaptation also includes second information, and PDCCH monitoring skipping associated information and/or SSSG switching associated information has been preconfigured, determining the PDCCH monitoring adaptation behavior based on the preconfigured PDCCH monitoring skipping associated information and/or the SSSG switching associated information, the second information and the first indication information,

where in case that the second information indicates the preconfigured PDCCH monitoring skipping associated information, the first indication information is in one-to-one correspondence with the preconfigured PDCCH monitoring skipping associated information; or,

in case that the second information indicates the preconfigured SSSG switching associated information, the first indication information is in one-to-one correspondence with the preconfigured SSSG switching associated information,

where the preconfigured PDCCH monitoring skipping associated information includes: disabling PDCCH monitoring skipping and/or skipping PDCCH monitoring for a set of target time intervals; and

the preconfigured SSSG switching associated information includes: not performing PDCCH monitoring in the SSSG and/or switching to or staying in a set of target SSSGs.

In an embodiment, when the terminal device receives the indication information for PDCCH monitoring adaptation transmitted from the network side device, and the indication information for PDCCH monitoring adaptation includes the first indication information and the second information, if the higher layer signaling or the protocol has preconfigured the PDCCH monitoring skipping associated information and the SSSG switching associated information, the PDCCH monitoring adaptation behavior of the terminal device is determined based on the first indication information, the second information and the above-mentioned preconfigured information.

The specific determination mode is as follows.

If the second information indicates the PDCCH monitoring skipping associated information in the preconfigured information, the PDCCH monitoring skipping associated information includes: disabling PDCCH monitoring skipping, skipping PDCCH monitoring for a set of target time intervals, for example: {disabling PDCCH monitoring skipping, skipping PDCCH monitoring for target time interval 1, ..., skipping PDCCH monitoring for target time interval N-1}, where N is the number of indication information included in the first indication information.

If the second information indicates the SSSG switching associated information in the preconfigured information, the SSSG switching associated information includes: not performing PDCCH monitoring in the SSSG, and/or switching to or staying in a target SSSG set, for example: {not performing PDCCH monitoring in the SSSG, switching to or staying in target SSSG0, ..., switching to or staying in target SSSGM-2}, or {switching to or staying in target SSSG0, ..., switching to or staying in target SSSGM}, where M is the number of indication information included in the first indication information. Not performing PDCCH monitoring in the SSSG means not performing monitoring in a search space set grouping mode, that is, PDCCH monitoring is performed on all search spaces configured by RRC.

2 bits first indication information is taken as an example. The preconfigured PDCCH monitoring skipping associated information is {disabling PDCCH monitoring skipping, skipping PDCCH monitoring for target time interval 1, skipping PDCCH monitoring for target time interval 2, skipping PDCCH monitoring for target time interval 3}. The preconfigured SSSG switching associated information is {not performing PDCCH monitoring in the SSSG, switching to or staying in target SSSG0, switching to or staying in target SSSG1, switching to or staying in target SSSG2}.

If the second information indicates the preconfigured PDCCH monitoring skipping associated information, {00, 01, 10, 11} of the first indication information correspond to {disabling PDCCH monitoring skipping, skipping PDCCH monitoring for target time interval 1, skipping PDCCH monitoring for target time interval 2, and skipping PDCCH monitoring for target time interval 3}, respectively.

If the second information indicates the preconfigured SSSG switching associated information, {00, 01, 10, 11} in the first indication information correspond to {not performing PDCCH monitoring in the SSSG, switching to or staying in target SSSG0, switching to or staying in target SSSG1, switching to or staying in target SSSG2}, respectively.

In the method for determining the PDCCH monitoring adaptation behavior provided by the embodiment of the present application, by combining the first indication information with the second information in the indication information for PDCCH monitoring adaptation, different indication information is configured, the PDCCH monitoring adaptation behavior is determined, and different PDCCH monitoring behaviors of the terminal device may be flexibly indicated, or PDCCH monitoring behaviors are switched, to save monitoring power consumption of the terminal device and ensure timely transmission of data.

In an embodiment, when the second information is used to indicate that the target SSSG is a specific SSSG, or when the second information is used to indicate that the target time interval is a specific time period, the second information is carried in one or a combination of DCI signaling, media access control (MAC) layer signaling or radio resource control (RRC) signaling.

In an embodiment, the second information may be transmitted through a variety of signaling, including DCI signaling, MAC layer signaling or RRC signaling, and may be transmitted through any one or a combination thereof.

In the method for determining the PDCCH monitoring adaptation behavior provided by the embodiment of the present application, by combining the first indication information with the second information in the indication information for PDCCH monitoring adaptation, different indication information is configured, the PDCCH monitoring adaptation behavior is determined, and different PDCCH monitoring behaviors of the terminal device may be flexibly indicated, or PDCCH monitoring behaviors are switched, to save monitoring power consumption of the terminal device and ensure timely transmission of data.

In an embodiment, the second information carried in a downlink signaling includes one or a combination of the following:

additional or specific bit information in the DCI signaling or the MAC signaling or the RRC signaling indicates specific SSSG associated information, or indicates PDCCH monitoring skipping associated information; or,

a redefinition of a current information field in the DCI signaling is used for indicating specific SSSG associated information, or indicating PDCCH monitoring skipping associated information,

where the specific SSSG associated information includes any of the following: not performing PDCCH monitoring in the SSSG, or switching to or staying in any SSSG in a set of target SSSGs, where the target SSSGs are different SSSGs; and

the PDCCH monitoring skipping associated information includes any of the following: disabling PDCCH monitoring skipping, skipping PDCCH monitoring for any time period in a set of target time intervals, where the target time intervals are different time periods.

In an embodiment, when the first indication information is switching to or staying in the target SSSG, and the second information is used to indicate that the target SSSG is a specific SSSG, the second information is carried through second downlink signaling, for example, transmitting by DCI/MAC control element (CE)/RRC signaling.

2 bits first indication information, and the base station and the terminal supporting up to 3 SSSGs are taken as an example. {00, 01, 10, 11} correspond to {disabling PDCCH monitoring skipping, skipping PDCCH monitoring for target time interval 1, skipping PDCCH monitoring for target time interval 2, switching to or staying in a target SSSG}, respectively. If PDCCH monitoring skipping is disabled, the terminal performs PDCCH monitoring based on a search space configured by the higher layer. When the first indication information is "11", the second information may be read to determine a SSSG to be subsequently switched to or stayed in.

The specific second information may be in any of the following modes.

1. The second information is an additional information field in DCI signaling.

For example: 2 bits of information {00, 01, 10, 11} is added in DCI, to indicate {not performing PDCCH monitoring in the SSSG, staying in or switching to SSSG0, staying in or switching to SSSG1, staying in or switching to SSSG2}, respectively. The second signaling carrying the second information may be the same DCI as the first indication information, or it may be different DCI.

When the first indication information is "11", the second information may be read from the second signaling to confirm the SSSG to be subsequently stayed in or switched to.

2. The second information is reusing a current information field in DCI signaling for redefinition indication.

For example: the second signaling carrying the second information may be scheduling DCI and/or non-scheduling DCI and/or an energy saving signal. The scheduling DCI is taken as an example, a secondary cell (SCell) dormancy indication information field in the DCI may be redefined as SSSG specific indication in the following mode.

When a carrier indicator field (CIF) is not 0, the SCell dormancy indication field may be used as a SSSG switching indication and/or SCell dormancy indication; and when the CIF is 0, the SCell dormancy indication field may be used to indicate a SCell dormancy behavior. 2 bit second information is taken as an example, {00, 01, 10, 11}, which are respectively used to indicate {not performing PDCCH monitoring in the SSSG, staying in or switching to SSSG0, staying in or switching to SSSG1, staying in or switching to SSSG2}. When the first indication information is "11", the second information in the second signaling may be read to confirm the SSSG to be subsequently stayed or switched.

3. The second information is carried in MAC signaling, and the MAC signaling is the second signaling.

For example, a MAC CE indicates the target SSSG in a bit mapping manner, where different bits corresponding to different SSSGs, or may be a specific SSSG indication.

When the first indication information is "11", the second information in the second signaling may be read to confirm the SSSG to be subsequently stayed or switched.

4. The second information is carried in RRC signaling, and the RRC signaling is the second signaling.

For example: the RRC signaling configures the target SSSG and may also configure a timer associated with the SSSG. When the first indication information is "11", the second information in the second signaling may be read to confirm the SSSG to be subsequently stayed or switched based on a parameter configuration of the RRC.

The terminal side receives the second information and the first indication carried in the downlink signaling, and learns the corresponding PDCCH monitoring adaptation behavior of the terminal indicated by the first indication information based on the second information, to achieve power saving effect of terminal.

When the first indication information is skipping PDCCH monitoring for a target time interval, and the second information is used to indicate that the target time interval is a specific time period, the second information is carried in the second downlink signaling, for example, transmitting by DCI/MAC control element (CE)/RRC signaling.

2 bits first indication information, and the base station and the terminal supporting up to 3 SSSGs are taken as an example. {00, 01, 10, 11} correspond to {switching to or staying in target SSSG1, switching to or staying in target SSSG2, switching to or staying in target SSSG3, skipping PDCCH monitoring for a target time interval}, respectively. When the first indication information is "11", the second information may be used to assist in indicating a specific target time interval for PDCCH monitoring skipping.

The second information is carried in the second downlink signaling, such as DCI/MAC CE/RRC signaling. Specifically, the second information may be in one of the following modes.

The second information may be an additional information field in DCI signaling.

For example: 2 bits of information {00, 01, 10, 11} is added in DCI, to indicate {skipping PDCCH monitoring for target time interval 1, skipping PDCCH monitoring for target time interval 2, skipping PDCCH monitoring for target time interval 3, skipping PDCCH monitoring for target time interval 4} respectively. The second signaling carrying the second information may be the same DCI as the first indication information, or it may be different DCI.

The second information is reusing a current information field in DCI signaling for redefinition indication.

For example: the second signaling carrying the second information may be scheduling DCI and/or non-scheduling DCI and/or an energy saving signal. The scheduling DCI is taken as an example, a secondary cell (SCell) dormancy indication information field in DCI may be redefined as skipping PDCCH monitoring for a target time interval under the following conditions.

When a CIF is not 0, the SCell dormancy indication field may be used as skipping PDCCH monitoring for a target time interval and/or a SCell dormancy indication; and when the CIF is 0, the SCell dormancy indication field may be used to indicate a SCell dormancy behavior. 2-bit second information is taken as an example, {00, 01, 10, 11}, which are respectively used to indicate {skipping PDCCH monitoring for target time interval 1, skipping PDCCH monitoring for target time interval 2, skipping PDCCH monitoring for target time interval 3, skipping PDCCH monitoring for target time interval 4}.

The second information is carried in MAC signaling, and the MAC signaling is the second signaling.

For example, a MAC CE indicates the target SSSG in a bit mapping manner, where different bits correspond to skipping PDCCH monitoring for different target time intervals, or it may be a specific indication of skipping PDCCH monitoring for a target time interval.

The second information is carried in RRC signaling, and the RRC signaling is the second signaling.

For example: RRC signaling configures a target skipping PDCCH monitoring for target time interval, and may also configure a timer associated with skipping the PDCCH monitoring for the target time interval.

In the method for determining the PDCCH monitoring adaptation behavior provided by the embodiment of the present application, by combining the first indication information with the second information in the indication information for PDCCH monitoring adaptation, different indication information is configured, the PDCCH monitoring adaptation behavior is determined, and different PDCCH monitoring behaviors of the terminal device may be flexibly indicated, or PDCCH monitoring behaviors are switched, to save monitoring power consumption of the terminal device and ensure timely transmission of data.

In an embodiment, in case that the first indication information does not include the configuration of the default SSSG or the initial SSSG, and the second information is used to indicate the default SSSG or the initial SSSG, determining the PDCCH monitoring adaptation behavior based on the first indication information and the corresponding second information includes:

determining to switch to or stay in the default SSSG or the initial SSSG based on the first indication information and the corresponding second information.

In an embodiment, when the terminal device receives the first indication information and cannot fall back to a normal PDCCH monitoring state based on the first indication information, that is, a state of disabling PDCCH monitoring skipping, or a state of switching to or staying in a default SSSG or an initial SSSG, the first indication information does not include a configuration of the default SSSG or the initial SSSG, the terminal device is determined to switch to or stay in the default SSSG or the initial SSSG through the second information transmitted from the network side device, where the second information is used to indicate the default SSSG or the initial SSSG. That is, the terminal device may fall back to the normal PDCCH monitoring state, that is, PDCCH monitoring is performed based on the search space configuration.

In an embodiment, in case that the first indication information cannot indicate disabling PDCCH monitoring skipping, and the second information is used to indicate disabling PDCCH monitoring skipping, determining the PDCCH monitoring adaptation behavior based on the first indication information and the corresponding second information includes:

determining disabling PDCCH monitoring skipping based on the first indication information and the corresponding second information.

In an embodiment, when the terminal device receives the first indication information and cannot fall back to a normal PDCCH monitoring state based on the first indication information, that is, a state of disabling PDCCH monitoring skipping, or a state of switching to or staying in a default SSSG or an initial SSSG, it may be that the first indication information cannot indicate disabling PDCCH monitoring skipping, and it is determined that the terminal device disables PDCCH monitoring skipping through the second information transmitted from the network side device, where the second information is used to indicate disabling PDCCH monitoring skipping. That is, the terminal device may fall back to the normal PDCCH monitoring state, that is, PDCCH monitoring is performed based on the search space configuration.

In an embodiment, the second information is used to indicate the default SSSG or the initial SSSG, or the second information is used to indicate disabling PDCCH monitoring skipping, and an implementation mode includes one or a combination of the following:

a scheduling data field in downlink signaling is a specific configuration, additional or specific bit information in downlink signaling is target configuration information, or a redefinition indication of a current information field in downlink signaling.

In an embodiment, the terminal device cannot fall back to the normal PDCCH monitoring state only based on the first indication information, that is, performing PDCCH monitoring based on the search space configuration. Indicating the terminal device to fall back through the second information specifically includes two situations.

Situation 1: when the first indication information does not include an indication for the terminal device to fall back to the normal PDCCH monitoring state, the second information is used to indicate the default SSSG or the initial SSSG. The second information may be transmitted in downlink signaling, such as DCI signaling. Specific implementation modes include any one or a combination of the following:

a scheduling data field in downlink signaling is a specific configuration, additional or specific bit information in downlink signaling is target configuration information, or a redefinition indication of a current information field in downlink signaling.

2 bits first indication information, and the base station and the terminal supporting up to 3 SSSGs are taken as an example. {00, 01, 10, 11} correspond to {disabling PDCCH monitoring skipping, skipping PDCCH monitoring for target time interval, switching to or staying in target SSSG#1, switching to or staying in target SSSG#2}, respectively. If PDCCH monitoring skipping is disabled, the terminal performs PDCCH monitoring based on a search space configured by the higher layer. Target SSSG#1 and target SSSG#2 are any two of {SSSG0, SSSG1, SSSG2}.

On this basis, the specific indication modes for {target SSSG#1 and target SSSG#2} include one or a combination of the following.

1) The terminal requires a configuration of the default SSSG or the initial SSSG. For example, SSSGO must be configured.

If {target SSSG#1 and target SSSG#2} is configured with a default SSSG or an initial SSSG, the terminal switches to or stays in the target SSSG based on the information indicated by the first indication information.

If {target SSSG#1 and target SSSG#2} are not configured with a default SSSG or initial SSSG, such as SSSGO. In an embodiment, the second information is used to assist in indicating the default SSSG or the initial SSSG. Specifically, it includes one or a combination of the following modes.

The second information is fallback DCI, where scheduling data fields are all 0 or all 1 or has a specific configuration. When the terminal receives the second information, it falls back to SSSGO.

The second information is 1~N bits added in non-scheduling DCI. When the terminal receives the second information, it falls back to SSSGO.

The second information is redefined by a current information field in the scheduling DCI, that is, in case that a certain limited configuration occurs, when the terminal receives the second information, it falls back to SSSGO.

2) If {SSSGO, SSSG1, SSSG2} does not limit the default SSSG or the initial SSSG, the terminal may stay in any SSSG arbitrarily.

Situation 2: when the first indication information does not include indication information for the terminal device to fall back to the normal PDCCH monitoring state, the second information is used to indicate disabling PDCCH monitoring skipping. For example, when the first indication information does not include indication information for disabling PDCCH monitoring skipping, the second information is used to assist in indicating to fall back to "disabling PDCCH monitoring skipping".

The second information may be transmitted in downlink signaling, such as DCI signaling. Specific implementation modes include any one or a combination of the following.

The second information is fallback DCI, where scheduling data fields are all 0 or all 1 or has a specific configuration. When the terminal receives the second information, it falls back to disabling PDCCH monitoring skipping.

The second information is 1~N bits added in non-scheduling DCI. When the terminal receives the second information, it falls back to disabling PDCCH monitoring skipping.

The second information is redefined by a current information field in the scheduling DCI, that is, in case that a certain limited configuration occurs, when the terminal receives the second information, it falls back to disabling PDCCH monitoring skipping.

In the method for determining the PDCCH monitoring adaptation behavior provided by the embodiment of the present application, by combining the first indication information with the second information in the indication information for PDCCH monitoring adaptation, different indication information is configured, the PDCCH monitoring adaptation behavior is determined, and different PDCCH monitoring behaviors of the terminal device may be flexibly indicated, or PDCCH monitoring behaviors are switched, to save monitoring power consumption of the terminal device and ensure timely transmission of data.

In an embodiment, determining the PDCCH monitoring adaptation behavior based on the indication information for PDCCH monitoring adaptation includes:

in case that the target SSSG has been preconfigured to be a specific SSSG, determining to switch to or stay in the target SSSG based on the first indication information, where the target SSSG is a preconfigured specific SSSG; and in case that a target time interval for which the PDCCH monitoring is skipped has been preconfigured to be a first time interval, determining that a specific time period of the target time interval for which the PDCCH monitoring is skipped is a preconfigured first time interval based on the first indication information.

In an embodiment, when the indication information for PDCCH monitoring adaptation only includes the first indication information, and a specific SSSG associated with monitoring skipping has been preconfigured through higher layer signaling or protocol, the specific SSSG is the target SSSG that the terminal device switches to or stays in.

Similarly, if a specific time period of the target time interval for which the PDCCH monitoring is skipped has been preconfigured through higher layer signaling or protocol, the target time interval for which the terminal device performs PDCCH monitoring skipping is the specific time period. For example, for a specific time period X, the time period for which the terminal performs PDCCH monitoring skipping is X, where X is greater than or equal to 0.

In an embodiment, in case that the second information is an association capability of the terminal device with respect to PDCCH monitoring adaptation or preference information of the terminal device, the first indication information is configured based on the second information.

In an embodiment, the configuration of the first indication information may be determined based on the capability of the terminal device or the preference information of the terminal device, where the terminal device capability is an association capability of the terminal device with respect to PDCCH monitoring adaptation, such as whether the terminal device supports PDCCH monitoring skipping, whether the terminal device supports SSSG switching, etc. The preference information of the terminal device is a priority choice made by the terminal device in different network environments. For example, if it needs to fall back to the normal PDCCH monitoring state, it may be achieved by including disabling PDCCH monitoring skipping in the first indication information, or by SSSG switching to the default SSSG or the initial SSSG. If the preference information reported by the terminal device is disabling PDCCH monitoring skipping, the base station considers the preference information of the terminal device and configures the first indication information to disable PDCCH monitoring skipping.

In the method for determining the PDCCH monitoring adaptation behavior provided by the embodiment of the present application, by combining the first indication information with the second information in the indication information for PDCCH monitoring adaptation, the actual terminal device capability and the preference information of the terminal device are comprehensively considered, different indication information is configured, the PDCCH monitoring adaptation behavior is determined, and different PDCCH monitoring behaviors of the terminal device may be flexibly indicated, or PDCCH monitoring behaviors are switched, to save monitoring power consumption of the terminal device and ensure timely transmission of data.

In an embodiment, the first indication information is configured based on the second information, and specific modes includes any one or a combination of the following:

in case that the second information is only supporting PDCCH monitoring skipping, the first indication information is a behavior indication associated with PDCCH monitoring skipping; or,
in case that the second information is SSSG switching other than Rel-16 SSSG switching, the first indication information is a behavior indication associated with SSSG switching; or,
in case that the second information is supporting PDCCH monitoring skipping and Rel-16 SSSG switching, the first indication information is a joint indication for both PDCCH monitoring skipping and SSSG switching,
where the Rel-16 SSSG switching includes switching to or staying in SSSG0, and switching to or staying in SSSG1.

In an embodiment, the second information may be third information transmitted from the terminal device, which is used to notify the base station of a specific configuration for the first indication information. The third information may be capability information of the terminal device (UE), or may be preference information of the terminal device, etc. The base station configures the first indication information for the terminal based on the third information. A specific example is given, which includes one or a combination of the following.

a) If the third information is only supporting PDCCH monitoring skipping, the first indication information is the behavior indication associated with PDCCH monitoring skipping; and if the first indication information is other indication information associated with SSSG switching, the terminal device does not support it, or falls back to a regular PDCCH monitoring behavior.
b) If the third information is only supporting Rel-17 SSSG switching, the first indication information is the behavior indication associated with SSSG switching. If the first indication information is other indication information associated with PDCCH monitoring skipping, the terminal device does not perform any one or a combination of behaviors associated with PDCCH monitoring skipping, or falls back to a regular monitoring behavior. The behavior associated with PDCCH monitoring skipping includes one or more of PDCCH monitoring skipping target time intervals, and is not limited to one target time interval.
c) If the third information is supporting both PDCCH monitoring skipping and Rel-16 SSSG switching, the first indication information is PDCCH monitoring skipping and/or SSSG switching. If the first indication information includes an SSSG indication other than the Rel-16, the terminal does not perform the corresponding SSSG2 behavior switching, or falls back to a regular monitoring behavior. The behavior associated with SSSG switching includes switching to or staying in target SSSG(s), which is not limited to one target SSSG.

In the method for determining the PDCCH monitoring adaptation behavior provided by the embodiment of the present application, by combining the first indication information with the second information in the indication information for PDCCH monitoring adaptation, the actual terminal device capability and the preference information of the terminal device are comprehensively considered, different indication information is configured, the PDCCH monitoring adaptation behaviors are determined, and different PDCCH monitoring behaviors of the terminal device may be flexibly indicated, or PDCCH monitoring behaviors are switched, to save monitoring power consumption of the terminal device and ensure timely transmission of data.

FIG. 2 is a second schematic flowchart of a method for determining a PDCCH monitoring adaptation behavior according to an embodiment of the present application. As shown in FIG. 2, an embodiment of the present application provides a method for determining a PDCCH monitoring adaptation behavior, which is applied to a network side device, and includes the following steps.

Step 201: transmitting indication information for PDCCH monitoring adaptation, where the indication information for PDCCH monitoring adaptation includes first indication information.

The first indication information is any of the following: disabling PDCCH monitoring skipping, skipping PDCCH monitoring for a target time interval, or switching to or staying in a target search space set group (SSSG), and the first indication information is used to determine a PDCCH monitoring adaptation behavior.

In an embodiment, the network side device, such as a base station, may indicate a PDCCH monitoring adaptation behavior of a terminal device by transmitting the indication information for PDCCH monitoring adaptation to the terminal device.

The indication information for PDCCH monitoring adaptation includes the first indication information, and the first indication information is any one or a combination of {disabling PDCCH monitoring skipping, skipping PDCCH monitoring for a target time interval, or switching to or staying in a target SSSG}.

Skipping PDCCH monitoring for the target time interval is disabled, that is, disabling PDCCH monitoring skipping.

Skipping PDCCH monitoring for the target time interval includes two situations.

if no specific time interval is given, it represents a behavior of skipping PDCCH monitoring for the target time interval, the specific time interval is uncertain, and there may be one or more combinations; and

if a specific time interval is given, it represents any one or combination of a set {skipping PDCCH monitoring for target time interval 1, ..., skipping PDCCH monitoring for target time intervals N}, where the value of the N is greater than or equal to 1.

Similarly, switching to or staying in the target SSSG may include the following meanings:

1. the target SSSG is not a specific SSSG, it represents a behavior of switching to or staying in the target SSSG, and the target SSSG is an uncertain SSSG.

2. the target SSSG is a specific SSSG, it represents any one or combination of a set {switching to or staying in a target SSSG0, ..., switching to or staying in a target SSSGM}, where the value of M is greater than or equal to 0.

The above-mentioned first indication information is transmitted to the terminal device for the terminal device to determine its own PDCCH monitoring adaptation behavior, such as normal PDCCH monitoring, that is, performing PDCCH monitoring based on a search space configuration, or not performing PDCCH monitoring within a certain time period, or performing PDCCH monitoring in a specific search space set, or performing SSSG switching.

In the method for determining the PDCCH monitoring adaptation behavior provided by the embodiment of the present application, the PDCCH monitoring adaptation behavior is determined based on different configurations of the indication information for PDCCH monitoring adaptation, and different PDCCH monitoring behaviors of the terminal device may be flexibly indicated, or PDCCH monitoring behaviors are switched, to save monitoring power consumption of the terminal device and ensure timely transmission of data.

In an embodiment, the PDCCH monitoring adaptation behavior at least includes: disabling PDCCH monitoring skipping, skipping PDCCH monitoring for a target time interval, or switching to or staying in a target SSSG, where the target time interval is a specific time period, and the target SSSG is a specific SSSG.

In an embodiment, based on different indication information for PDCCH monitoring adaptation, the determined PDCCH monitoring adaptation behavior at least includes:

disabling PDCCH monitoring skipping, that is, the terminal device performs normal PDCCH monitoring, that is, performing PDCCH monitoring based on search space configuration;

skipping PDCCH monitoring for a specific time period of the target time interval, that is, the terminal device does not perform PDCCH monitoring during the specific time period;

switching to or staying in a target SSSG, where the target SSSG is a specific SSSG, which indicates two situations:

situation 1: the terminal device switches to the specific SSSG and performs PDCCH monitoring based on a monitoring occasion configured in the specific SSSG, where the specific SSSG is different from an SSSG originally configured for the terminal device; and

situation 2: the terminal device stays in the specific SSSG and performs PDCCH monitoring based on the monitoring occasion configured in the specific SSSG, where the specific SSSG is the same as the SSSG originally configured for the terminal device.

In the method for determining the PDCCH monitoring adaptation behavior provided by the embodiment of the present application, the PDCCH monitoring adaptation behavior is determined based on different configurations of the indication information for PDCCH monitoring adaptation, and different PDCCH monitoring behaviors of the terminal device may be flexibly indicated, or PDCCH monitoring behaviors are switched, to save monitoring power consumption of the terminal device and ensure timely transmission of data.

In an embodiment, the indication information for PDCCH monitoring adaptation also includes second information, and the first indication information and the second information have the following corresponding relationships:

in case that the first indication information is switching to or staying in the target SSSG, the second information is used to indicate that the target SSSG is a specific SSSG; or,

in case that the first indication information is skipping PDCCH monitoring for the target time interval, the second information is used to indicate that the target time interval is a specific time period; or,

in case that the first indication information does not include a configuration of a default SSSG or an initial SSSG, the second information is used to indicate the default SSSG or the initial SSSG; or,

in case that the first indication information cannot indicate disabling PDCCH monitoring skipping, the second information is used to indicate disabling PDCCH monitoring skipping,

where the first indication information and the corresponding second information are used to determine the PDCCH monitoring adaptation behavior.

In an embodiment, the indication information for PDCCH monitoring adaptation transmitted from the network side device includes first indication information and second information. The second information is used to assist in indicating a specific PDCCH monitoring adaptation behavior of the terminal device. For example, when the target time interval in the first indication information is uncertain, or the target SSSG is uncertain, or there is no association configuration of returning to a normal PDCCH monitoring state, the second information may indicate which specific time interval, or which specific SSSG, or indicate the configuration of returning to the normal PDCCH monitoring state (the configured default SSSG or the initial SSSG, and/or disabling PDCCH monitoring skipping).

The combination of the above first indication information and the second information indicates the PDCCH monitoring adaptation behavior of the terminal device, specifically includes:

in case that the first indication information is switching to or staying in a target SSSG, the second information is used to indicate that the target SSSG is a specific SSSG; or,

in case that the first indication information is skipping PDCCH monitoring for a target time interval, the second information is used to indicate that the target time interval is a specific time period; or,

in case that the first indication information does not include a configuration of a default SSSG or an initial SSSG, the second information is used to indicate the default SSSG or the initial SSSG; or,

in case that the first indication information cannot indicate disabling PDCCH monitoring skipping, the second information is used to indicate disabling PDCCH monitoring skipping.

The network side device transmits the above-mentioned first indication information and the second information to the terminal device, and the terminal device determines its specific PDCCH monitoring adaptation behavior.

In the method for determining the PDCCH monitoring adaptation behavior provided by the embodiment of the present application, by combining the first indication information with the second information in the indication information for PDCCH monitoring adaptation, different indication information is configured, the PDCCH monitoring adaptation behavior is determined, and different PDCCH monitoring behaviors of the terminal device may be flexibly indicated, or PDCCH monitoring behaviors are switched, to save monitoring power consumption of the terminal device and ensure timely transmission of data.

In an embodiment, a configuration of the first indication information is determined based on an association capability of a terminal device with respect to PDCCH monitoring adaptation or preference information of a terminal device configured in the second information.

In an embodiment, the network side device comprehensively considers, based on a capability of the terminal device or preference information of the terminal device, to transmit appropriate first indication information to the terminal device in a targeted manner.

In an embodiment, the terminal device capability is an association capability of the terminal device with respect to PDCCH monitoring adaptation, such as whether the terminal device supports PDCCH monitoring skipping, whether the terminal device supports SSSG switching, etc. The preference information of the terminal device is a priority choice made by the terminal device in different network environments. For example, if it needs to fall back to the normal PDCCH monitoring state, it may be achieved by including disabling PDCCH monitoring skipping in the first indication information, or by SSSG switching to the default SSSG or the initial SSSG. If the preference information reported by the terminal device is disabling PDCCH monitoring skipping, the base station considers the preference information of the terminal device and configures the first indication information to disable PDCCH monitoring skipping.

In the method for determining the PDCCH monitoring adaptation behavior provided by the embodiment of the present application, by combining the first indication information with the second information in the indication information for PDCCH monitoring adaptation, the actual terminal device capability and the preference information of the terminal device are comprehensively considered, different indication information is configured, the PDCCH monitoring adaptation behavior is determined, and different PDCCH monitoring behaviors of the terminal device may be flexibly indicated, or PDCCH monitoring behaviors are switched, to save monitoring power consumption of the terminal device and ensure timely transmission of data.

In an embodiment, modes for determining the configuration of the first indication information based on the association capability of the terminal device with respect to PDCCH monitoring adaptation or the preference information of the terminal device configured in the second information includes one or a combination of the following:

in case that the second information is only supporting PDCCH monitoring skipping, the first indication information is a behavior indication associated with PDCCH monitoring skipping; or,

in case that the second information is SSSG switching other than Rel-16 SSSG switching, the first indication information is a behavior indication associated with SSSG switching; or,

in case that the second information is supporting PDCCH monitoring skipping and Rel-16 SSSG switching, the first indication information is a joint indication for both PDCCH monitoring skipping and SSSG switching,

where the Rel-16 SSSG switching includes switching to or staying in SSSG0, and switching to or staying in SSSG1.

In an embodiment, the second information may be third information transmitted from the terminal device, which is used to notify the base station of a specific configuration for the first indication information. The third information may be capability information of the terminal device (UE), or may be preference information of the terminal device, etc. The base station configures the first indication information for the terminal based on the third information. A specific example is given, which includes one or a combination of the following.

a) If the third information is only supporting PDCCH monitoring skipping, the first indication information is the behavior indication associated with PDCCH monitoring skipping; and if the first indication information is other indication information associated with SSSG switching, the terminal device does not support it, or falls back to a regular PDCCH monitoring behavior.

b) If a capability of the third information is only supporting Rel-17 SSSG switching, the first indication information is the behavior indication associated with SSSG switching. If the first indication information is other indication information associated with PDCCH monitoring skipping, the terminal device does not perform any one or a combination of behaviors associated with PDCCH monitoring skipping, or falls back to a regular monitoring behavior. The behavior associated with PDCCH monitoring skipping includes one or more of PDCCH monitoring skipping target time intervals, and is not limited to one target time interval.

c) If a capability of the third information is supporting both PDCCH monitoring skipping and Rel-16 SSSG switching, the first indication information is PDCCH monitoring skipping and/or SSSG switching. If the first indication information includes an SSSG indication other than the Rel-16, the terminal does not perform the corresponding SSSG2 behavior switching, or falls back to a regular monitoring behavior. The behavior associated with SSSG switching includes switching to or staying in target SSSG(s), which is not limited to one target SSSG.

In the method for determining the PDCCH monitoring adaptation behavior provided by the embodiment of the present application, by combining the first indication information with the second information in the indication information for PDCCH monitoring adaptation, the actual capability of the terminal device and the preference information of the terminal device are comprehensively considered, different indication information is configured, the PDCCH monitoring adaptation behavior is determined, and different PDCCH monitoring behaviors of the terminal device may be flexibly indicated, or PDCCH monitoring behaviors are switched, to save monitoring power consumption of the terminal device and ensure timely transmission of data.

In an embodiment, transmitting the indication information for PDCCH monitoring adaptation including the first indication information includes:

in case that the indication information for PDCCH monitoring adaptation also includes second information, and PDCCH monitoring skipping associated information and/or SSSG switching associated information has been preconfigured, the preconfigured PDCCH monitoring skipping associated information and/or the SSSG switching associated information, the second information and the first indication information have the following corresponding relationships:

in case that the second information indicates the preconfigured PDCCH monitoring skipping associated information, the first indication information is in one-to-one correspondence with the preconfigured PDCCH monitoring skipping associated information; or,

in case that the second information indicates the preconfigured SSSG switching associated information, the first indication information is in one-to-one correspondence with the preconfigured SSSG switching associated information,

where the preconfigured PDCCH monitoring skipping associated information includes: disabling PDCCH monitoring skipping and/or skipping PDCCH monitoring for a set of target time intervals; and

the preconfigured SSSG switching associated information includes: not performing PDCCH monitoring in the SSSG and/or switching to or staying in a set of target SSSGs.

In an embodiment, when the network side device transmits the indication information for PDCCH monitoring adaptation, and the indication information for PDCCH monitoring adaptation includes the first indication information and the second information, if the higher layer signaling or the protocol has preconfigured the PDCCH monitoring skipping associated information and the SSSG switching associated information, the terminal device determines the PDCCH monitoring adaptation behavior of the terminal device based on the first indication information, the second information and the above-mentioned preconfigured information.

The specific determining method of the terminal device is the same as the method of determining the PDCCH monitoring adaptation behavior provided by the embodiment of the present application applied to the terminal device, and may achieve the same effect. The corresponding method in this embodiment is not repeated here.

In the method for determining the PDCCH monitoring adaptation behavior provided by the embodiment of the present application, by combining the first indication information with the second information in the indication information for PDCCH monitoring adaptation, different indication information is configured, the PDCCH monitoring adaptation behaviors are determined, and different PDCCH monitoring behaviors of the terminal device may be flexibly indicated, or PDCCH monitoring behaviors are switched, to save monitoring power consumption of the terminal device and ensure timely transmission of data.

The network side device provided by the present application, such as a base station, indicates the corresponding PDCCH monitoring adaptation behavior of the terminal through the second information and/or first indication information carried in the downlink signaling, an effect of terminal power saving is achieved. The first indication information may be additional N-bit information in the downlink signaling, or may be N-bit information redefined in the downlink signaling.

The second information is used to assist the first indication information in giving specific indication on a PDCCH adaptation behavior of the terminal, and is carried by DCI or MAC or RRC signaling, which has one or any combination of the following solutions.

Solution 1: when the first indication information indicates "PDCCH monitoring skip" or "SSSG switching", the second information is used to assist in indicating a specific PDCCH monitoring adaptation behavior of the terminal, including { skipping PDCCH monitoring for a target time interval i}, where i is greater than or equal to 1 and less than or equal to N, or {switching to or staying in a target SSSG in a target SSSG set}. The second information is carried in DCI/MAC/RRC signaling, and may be one or any combination of the following modes:

an additional information field in DCI signaling;
reusing a current information field in DCI signaling for redefinition indication;
indicating by MAC CE; or
RRC signaling configuration.

Solution 2: when the first indication information is only used to indicate {skipping PDCCH monitoring for a target time interval}, or {switching to or staying in an SSSG in the target SSSG set}, the second information is used to indicate the terminal to fall back to a regular monitoring behavior or a default monitoring behavior or an initial monitoring behavior, such as behavior 1 and/or behavior 2. The second information may be DCI other than the scheduling DCI carrying the PDCCH monitoring adaptation indication. Specifically, it may be one of the following modes.

Through fallback DCI where scheduling data fields are all 0 or all 1 or has a specific configuration, for indicating the terminal to fall back to the regular monitoring behavior or the default monitoring behavior or the initial monitoring behavior.

Through non-scheduling DCI in which 1~N bits are added, for indicating the terminal to fall back to the regular monitoring behavior or the default monitoring behavior or the initial monitoring behavior.

Through a redefinition of a current information field in scheduling DCI, that is, a certain limited configuration occurs, and the terminal is indicated to fall back to the regular monitoring behavior or the default monitoring behavior or the initial monitoring behavior.

Solution 3: When the first indication information is only used to indicate a type of PDCCH monitoring adaptation behavior, the second information is UE capability information transmitted from the UE, or third information, namely UE preference information, which is used to indicate the support or preference of the terminal for PDCCH monitoring skipping or SSSG switching or a target SSSG.

If the terminal may support two PDCCH monitoring adaptation behaviors, and the second information is that the terminal prefers PDCCH monitoring skipping, then the first indication information is a behavior indication associated with PDCCH monitoring skipping;

If a capability of the third information is only supporting Rel-17 SSSG switching, the first indication information is a behavior indication associated with SSSG switching.

If a capability of the third information is supporting PDCCH monitoring skipping and Rel-16 SSSG switching, the first indication information is a joint indication for both PDCCH monitoring skipping and SSSG switching.

The behavior associated with PDCCH monitoring skipping includes one or more of disabling PDCCH monitoring skipping or skipping PDCCH monitoring for the target time interval(s), which is not limited to one target time interval. The behavior associated with SSSG switching includes switching to or staying in target SSSG(s), which is not limited to one target SSSG.

The method for determining the PDCCH monitoring adaptation behavior provided by the present application is described below with specific embodiments.

Situation 1: the first indication information includes switching to or staying in a target SSSG, and the target SSSG is uncertain. For example, the first indication information indicates {disabling PDCCH monitoring skipping, skipping PDCCH monitoring for target time interval 1, ..., skipping PDCCH monitoring for target time interval N (where N is greater than or equal to 1), and/or switching to or staying in a target SSSG}. The target SSSG is any SSSG of configured SSSGs, which may be a default SSSG or an initial SSSG, or an additional SSSG based on the Rel-16 standard. When there is only one target time interval for which DCCH monitoring is skipped in the above indication information set, it is equivalent to enabling PDCCH monitoring skipping. Switching to or staying in the target SSSG refers to switching to or staying in a configured target SSSG, and may also indicate performing a SSSG switching behavior.

2 bits first indication information, and the base station and the terminal supporting up to 3 SSSGs are taken as an example. {00, 01, 10, 11} correspond to {disabling PDCCH monitoring skipping, skipping PDCCH monitoring for target time interval 1, skipping PDCCH monitoring for target time interval 2, switching to or staying in a target SSSG} respectively. If PDCCH monitoring skipping is disabled, the terminal performs PDCCH monitoring based on a search space configured by the higher layer.

The PDCCH monitoring skipping behavior in the first indication information may be applied to a configured SSSG, such as a current SSSG or a SSSG associated with monitoring skipping specified by the protocol, that is, all or part of the search space set in the SSSG needs to skip a time interval correspondingly based on the first indication information. Skipping PDCCH monitoring for different target time intervals N in the first indication information may be applied to the same SSSG, or may be applied to different SSSGs respectively. For example: skipping PDCCH monitoring for the target time interval 1 or skipping PDCCH monitoring for the target time interval 2 is only used for at least one of SSSG0, SSSG1, or SSSG2. The target SSSG may be SSSG0, SSSG1, or SSSG2, which is configured by higher layer signaling or specified by the protocol. When the first indication information transmitted from the base station is "01" or "10", it indicates the terminal not performing PDCCH monitoring on the specific SSSG. When the first indication information is "11", the terminal is indicated to only perform PDCCH monitoring on the target SSSG, and monitor the PDCCH based on a search space configuration on the SSSG. The target SSSG may be SSSG0, SSSG1, or SSSG2, which is preconfigured by higher layer signaling or specified by the protocol.

The PDCCH monitoring skipping behavior in the first indication information may be applied to a currently activated BWP, that is, all designated PDCCHs configured on the currently activated BWP. PDCCH on type 3 common search space or UE-specific search space is taken as an example, all will skip PDCCH monitoring for a target time interval. When the first indication information transmitted from the base station transmits is "01" or "10", it indicates the terminal not to perform PDCCH monitoring on the currently activated BWP, and the skipping time is the target time interval 1 or the target time interval 2 respectively. When the first indication information is "11", the terminal is indicated to only perform PDCCH monitoring on the target SSSG, and monitor the PDCCH based on a search space configuration for the SSSG. The target SSSG may be SSSG0, SSSG1, or SSSG2, which is preconfigured by higher layer signaling or specified by the protocol.

The PDCCH monitoring skipping behavior in the first indication information may be only applied to a search space set where the first indication information is associated. When the first indication information transmitted from the base station is "01" or "10", it indicates the terminal not to perform designated PDCCH monitoring on a current search space set, and the skipping time is the target time interval 1 or the target time interval 2 respectively. When the first indication information is "11", the terminal is indicated to only perform PDCCH monitoring on the target SSSG, and monitor the PDCCH based on a search space configuration for the SSSG. The target SSSG may be SSSG0, SSSG1, or SSSG2, which is preconfigured by higher layer signaling or specified by the protocol.

1) Switching to or staying in a target SSSG being a preconfigured SSSG, where the preconfigured SSSG may be configured through higher layer signaling or specified by the protocol.

The terminal receives the downlink signaling carrying the first indication information, and learns the corresponding PDCCH monitoring adaptation behavior of the terminal based on the first indication information, to achieve power saving effect of terminal.

2) Switching to or staying in a target SSSG is determined by the second information indication. Up to 3 SSSGs is taken as an example, and the second information assists in indicating to switch to or stay in least one of {SSSGO, SSSG1, SSSG2}. The second information is carried in second downlink signaling, such as DCI/MAC CE/RRC signaling. Specifically, the second information may be in one of the following modes.

(1) The second information is an additional information field in DCI signaling.

For example: 2 bits of information {00, 01, 10, 11} is added in DCI, to indicate {not performing PDCCH monitoring in the SSSG, staying in or switching to SSSG0, staying in or switching to SSSG1, staying in or switching to SSSG2}, respectively. The second signaling carrying the second information may be the same DCI as the first indication information, or it may be different DCI.

When the first indication information is "11", the second information may be read in the second signaling to confirm the SSSG to be subsequently stayed in or switched to.

(2) The second information is reusing a current information field in DCI signaling for redefinition indication.

For example: the second signaling carrying the second information may be scheduling DCI and/or non-scheduling DCI and/or an energy saving signal. The scheduling DCI is taken as an example, a secondary cell (SCell) dormancy indication information field in the DCI may be redefined as SSSG specific indication in the following mode.

When a carrier indicator field (CIF) is not 0, the SCell dormancy indication field may be used as a SSSG switching indication and/or SCell dormancy indication; and when the CIF is 0, the SCell dormancy indication field may be used to indicate a SCell dormancy behavior. 2 bits second information is taken as an example, {00, 01, 10, 11}, which are used to indicate {not performing PDCCH monitoring in the SSSG, staying in or switching to SSSG0, staying in or switching to SSSG1, staying in or switching to SSSG2}, respectively. When the first indication information is "11", the second information in the second signaling may be read to confirm the SSSG to be subsequently stayed or switched.

(3) The second information is carried in MAC signaling, and the MAC signaling is the second signaling.

For example, a MAC CE indicates the target SSSG in a bit mapping manner, where different bits corresponding to different SSSGs, or may be a specific SSSG indication.

When the first indication information is "11", the second information in the second signaling may be read to confirm the SSSG to be subsequently stayed or switched.

(4) The second information is carried in RRC signaling, and the RRC signaling is the second signaling.

For example: the RRC signaling configures the target SSSG and may also configure a timer associated with the SSSG. When the first indication information is "11", the second information in the second signaling may be read to confirm the SSSG to be subsequently stayed or switched based on a parameter configuration of the RRC.

The terminal side receives the second information and the first indication carried in the downlink signaling, and learns the corresponding PDCCH monitoring adaptation behavior of the terminal indicated by the first indication information based on the second information, to achieve power saving effect of terminal.

Situation 2: the first indication information includes skipping PDCCH monitoring for a target time interval, and the target time interval is uncertain. For example, the first indication information indicates {disabling PDCCH monitoring skipping, skipping PDCCH monitoring for a target time interval, and/or {switching to or staying in target SSSG#1, ..., switching to or staying in target SSSG#N} }, where N is greater than or equal to 1. A target SSSG set consists of target SSSG#N is a subset or a universal set of configured SSSG sets. The target SSSG is any SSSG in the target SSSG set, which may be a default SSSG or an initial SSSG, or an additional SSSG based on the Rel-16 standard. When there is only one target time interval for which PDCCH monitoring is skipped in the above indication information set, which is equivalent to enabling PDCCH monitoring skipping.

1. If skipping the PDCCH monitoring for a target time interval corresponds to a specific target time interval, the target time interval may be configured through higher layer signaling or specified by the protocol.

2. If skipping the PDCCH monitoring for a target time interval corresponds to skipping PDCCH monitoring for different time intervals, optionally, the second information assists in indicating the different target time intervals for PDCCH monitoring skipping.

2 bits first indication information, and the base station and the terminal supporting up to 3 SSSGs are taken as an example. {00, 01, 10, 11} correspond {switching to or staying in target SSSG#1, switching to or staying in target SSSG#2, switching to or staying in target SSSG#3, PDCCH monitoring skipping a target time interval}, respectively. When the first indication information is "11", the second information may be used to assist in indicating a specific target time interval for which PDCCH monitoring is skipped.

The second information is carried in the second downlink signaling, such as DCI/MAC CE/RRC signaling. Specifically, the second information may be in one of the following modes.

(1) The second information is an additional information field in DCI signaling.

For example: 2 bits of information {00, 01, 10, 11} is added in DCI, to indicate {skipping PDCCH monitoring for target time interval 1, skipping PDCCH monitoring for target time interval 2, skipping PDCCH monitoring for target time interval 3, skipping PDCCH monitoring for a target time interval 4} respectively. The second signaling carrying the second information may be the same DCI as the first indication information, or it may be different DCI.

(2) The second information is reusing a current information field in DCI signaling for redefinition indication.

For example: the second signaling carrying the second information may be scheduling DCI and/or non-scheduling DCI and/or an energy saving signal. The scheduling DCI is taken as an example, a secondary cell (SCell) dormancy indication information field in DCI may be redefined as skipping PDCCH monitoring for a target time interval under the following conditions.

When a CIF field is not 0, the SCell dormancy indication field may be used as skipping PDCCH monitoring for a target time interval and/or a SCell dormancy indication; and when the CIF field is 0, the SCell dormancy indication field may be used to indicate a SCell dormancy behavior. 2 bits second information is taken as an example, {00, 01, 10, 11}, which are respectively used to indicate {skipping PDCCH monitoring for target time interval 1, skipping PDCCH monitoring for target time interval 2, skipping PDCCH monitoring for target time interval 3, skipping PDCCH monitoring for target time interval 4}.

(3) The second information is carried in MAC signaling, and the MAC signaling is the second signaling.

For example, a MAC CE indicates the target SSSG, in a bit mapping manner, where different bits correspond to skipping PDCCH monitoring for different target time intervals, or it may be a specific indication of skipping PDCCH monitoring for a target time interval.

(4) The second information is carried in RRC signaling, and the RRC signaling is the second signaling.

For example: RRC signaling configures a target skipping PDCCH monitoring for target time interval, and may also configure a timer associated with skipping the PDCCH monitoring for the target time interval.

Situation 3: the first indication information does not include indicating to fall back to a regular or normal PDCCH monitoring state, that is, the first indication information does not include a configuration of a default SSSG or an initial SSSG, or the first indication information cannot indicate disabling PDCCH monitoring skipping.

3.1 In case that the first indication information does not include a configuration of a default SSSG or an initial SSSG, the second information is used to indicate the default SSSG or the initial SSSG.

2 bits first indication information, and the base station and the terminal supporting up to 3 SSSGs are taken as an example. {00, 01, 10, 11} correspond to {disabling PDCCH monitoring skipping, skipping PDCCH monitoring for a target time interval, switching to or staying in target SSSG#1, switching to or staying in target SSSG#2}, respectively. If disabling PDCCH monitoring skipping, the terminal performs PDCCH monitoring based on a search space configured by the higher layer. Target SSSG#1 and target SSSG#2 are any two of {SSSG0, SSSG1, SSSG2}.

On this basis, the specific indication modes for {target SSSG#1 and target SSSG#2} include one or a combination of the following:

(1) The terminal requires a configuration of the default SSSG or the initial SSSG. For example, SSSGO must be configured.

If {target SSSG#1 and target SSSG#2} is configured with a default SSSG or an initial SSSG, the terminal switches to or stays in the target SSSG based on the information indicated by the first indication information.

If {target SSSG#1 and target SSSG#2} are not configured with a default SSSG or initial SSSG, such as SSSGO. In an embodiment, the second information is used to assist in indicating the default SSSG or the initial SSSG. Specifically, it includes one or a combination of the following modes.

The second information is fallback DCI, where scheduling data fields are all 0 or all 1 or has a specific configuration. When the terminal receives the second information, it falls back to SSSGO.

The second information is 1~N bits added in non-scheduling DCI. When the terminal receives the second information, it falls back to SSSGO.

The second information is redefined by a current information field in the scheduling DCI, that is, in case that a certain limited configuration occurs, when the terminal receives the second information, it falls back to SSSGO.

(2) If {SSSG0, SSSG1, SSSG2} does not limit the default SSSG or the initial SSSG, that is, the terminal may stay in any SSSG arbitrarily.

3.2 In case that the first indication information cannot indicate disabling PDCCH monitoring skipping, the second information is used to indicate disabling PDCCH monitoring skipping. Specifically, it includes one or any combination of the following modes.

The second information is fallback DCI, where scheduling data fields are all 0 or all 1 or has a specific configuration. When the terminal receives the second information, it falls back to disabling PDCCH monitoring skipping.

The second information is 1~N bits added in non-scheduling DCI. When the terminal receives the second information, it falls back to disabling PDCCH monitoring skipping.

The second information is redefined by a current information field in the scheduling DCI, that is, in case that a certain limited configuration occurs, when the terminal receives the second information, it falls back to disabling PDCCH monitoring skipping.

Situation 4: the higher layer signaling or the protocol has preconfigured the PDCCH monitoring skipping associated information and the SSSG switching associated information, the PDCCH monitoring adaptation behavior of the terminal device is determined based on the first indication information, the second information and the above-mentioned preconfigured information.

The specific determination mode is as follows.

4.1 The second information indicates the PDCCH monitoring skipping associated information in the preconfigured information, the PDCCH monitoring skipping associated information includes: disabling PDCCH monitoring skipping, skipping PDCCH monitoring for a set of target time intervals, for example: {disabling PDCCH monitoring skipping, skipping PDCCH monitoring for target time interval 1, ..., skipping PDCCH monitoring for target time interval N-1}, where N is the number of indication information included in the first indication information.

4.2 The second information indicates the SSSG switching associated information in the preconfigured information, the SSSG switching associated information includes: not performing PDCCH monitoring in the SSSG, and/or switching to or staying in a target SSSG set, for example: {not performing PDCCH monitoring in the SSSG, switching to or staying in target SSSG0, ..., switching to or staying in target SSSGM-2}, or {switching to or staying in target SSSG0, ..., switching to or staying in target SSSGM}, where M is the number of indication information included in the first indication information. Not performing PDCCH monitoring in the SSSG means not performing monitoring based on a search space grouping, that is, all search spaces configured by RRC must be monitored.

2 bits first indication information is taken as an example. The preconfigured PDCCH monitoring skipping associated information is {disabling PDCCH monitoring skipping, skipping PDCCH monitoring for target time interval 1, skipping PDCCH monitoring for target time interval 2, skipping PDCCH monitoring for target time interval 3}. The preconfigured SSSG switching associated information is {not performing PDCCH monitoring in the SSSG, switching to or staying in target SSSG0, switching to or staying in target SSSG1, switching to or staying in target SSSG2}.

If the second information indicates the preconfigured PDCCH monitoring skipping associated information, {00, 01, 10, 11} of the first indication information respectively correspond to {disabling PDCCH monitoring skipping, skipping PDCCH monitoring for the target time interval 1, skipping PDCCH monitoring for the target time interval 2, and skipping PDCCH monitoring for the target time interval 3}.

If the second information indicates the preconfigured SSSG switching associated information, {00, 01, 10, 11} of the first indication information respectively correspond to {not performing PDCCH monitoring in the SSSG, switching to or staying in target SSSG0, switching to or staying in target SSSG1, switching to or staying in target SSSG2}.

Situation 5: the first indication information is determined based on a capability of the terminal device or preference information of the terminal device.

In an embodiment, the second information may be third information transmitted from the terminal, which is used to notify the base station of a specific configuration of the first indication information. The third information may be capability information of the terminal device (UE), or may be preference information of the terminal device, etc. The base station configures the first indication information for the terminal based on the third information. A specific example is given, which includes one or a combination of the following.

a) If the third information is only supporting PDCCH monitoring skipping, the first indication information is the behavior indication associated with PDCCH monitoring skipping; and if the first indication information is other indication information associated with SSSG switching, the terminal device does not support it, or falls back to a regular PDCCH monitoring behavior.

b) If a capability of the third information is only supporting Rel-17 SSSG switching, the first indication information is the behavior indication associated with SSSG switching. If the first indication information is other indication information associated with PDCCH monitoring skipping, the terminal device does not perform any one or a combination of behaviors associated with PDCCH monitoring skipping, or falls back to a regular monitoring behavior. The behavior associated with PDCCH monitoring skipping includes one or more of PDCCH monitoring skipping target time intervals, and is not limited to one target time interval.

c) If a capability of the third information is supporting both PDCCH monitoring skipping and Rel-16 SSSG switching, the first indication information is PDCCH monitoring skipping and/or SSSG switching. If the first indication information includes an SSSG indication other than the Rel-16, the terminal does not perform the corresponding SSSG2 behavior switching, or falls back to a regular monitoring behavior. The behavior associated with SSSG switching includes switching to or staying in target SSSG(s), which is not limited to one target SSSG.

In an embodiment, the base station transmits second information to indicate specific indication of the first indication information, which may be one or any combination of the following modes:

in case that the second information is for configuring Rel-16 SSSG switching, the first indication information is a behavior indication associated with PDCCH monitoring skipping; or

in case that the second information is for configuring skipping PDCCH monitoring for a target time interval, the first indication information is a behavior indication associated with PDCCH monitoring skipping,

where the Rel-16 SSSG switching includes switching to or staying in SSSG0, and switching to or staying in SSSG 1.

FIG. 3 is a schematic structural diagram of a terminal electronic device according to an embodiment of the present application. As shown in FIG. 3, the terminal electronic device includes a memory 320, a transceiver 310 and a processor 300, and the processor 300 and the memory 320 may also be physically separated.

The memory 320 is used to store a computer program, the transceiver 310 is used to transmit and receive data under control of the processor 300.

Specifically, the transceiver 310 is used to receive and transmit data under the control of the processor 300.

In FIG. 3, a bus architecture may include any number of interconnected buses and bridges, which are linked together through various circuits of one or more processors represented by processor 310 and one or more memories represented by the memory 320. The bus architecture may also link together various other circuits, such as peripherals, voltage regulators, and power management circuits. These are well known in the art and therefore will not be described further in the present application. The bus interface provides an interface. The transceiver 310 may be multiple elements, i.e., including a transmitter and a receiver, units for providing communication with various other devices over transmission media including wireless channels, wired channels, fiber optic cables, and the like. For different user equipment, the user interface 330 may also be an interface capable of externally or internally connecting the required equipment, and the connected equipment includes, but not limited to, a keypad, a display, a speaker, a microphone, a joystick, and the like.

The processor 300 is responsible for managing the bus architecture and general processing, and the memory 320 may store data used by the processor 300 when performing operations.

The processor 300 may be a central processing unit (CPU), an application specific integrated circuit (ASIC), a field-programmable gate array (FPGA), or a complex programmable logic device (CPLD), and the processor may also use a multi-core architecture.

The processor 300 is configured to execute the method applied to the terminal device provided by the embodiments of the present application according to the obtained executable instructions by calling the computer program stored in the memory 320, for example:

receiving indication information for PDCCH monitoring adaptation transmitted from a network side device, where the indication information for PDCCH monitoring adaptation includes first indication information; and

determining a PDCCH monitoring adaptation behavior based on the indication information for PDCCH monitoring adaptation,

where the first indication information is any of the following: disabling PDCCH monitoring skipping, skipping PDCCH monitoring for a target time interval, or switching to or staying in a target search space set group (SSSG).

In an embodiment, the PDCCH monitoring adaptation behavior at least includes: disabling PDCCH monitoring skipping, skipping PDCCH monitoring for a target time interval, or switching to or staying in a target SSSG,

where the target time interval is a specific time period, and the target SSSG is a specific SSSG.

In an embodiment, the skipping PDCCH monitoring for the target time interval is applied to any of the following scenarios:

a first search space set where the first indication information is associated, a specific search space set, a preconfigured specific SSSG or a currently activated band width part (BWP).

In an embodiment, determining the PDCCH monitoring adaptation behavior based on the indication information for PDCCH monitoring adaptation includes:

in case that the indication information for PDCCH monitoring adaptation also includes second information, determining the PDCCH monitoring adaptation behavior based on the first indication information and the corresponding second information,

where in case that the first indication information is switching to or staying in the target SSSG, the second information is used to indicate that the target SSSG is a specific SSSG; or,

in case that the first indication information is skipping PDCCH monitoring for the target time interval, the second information is used to indicate that the target time interval is a specific time period; or,

in case that the first indication information does not include a configuration of a default SSSG or an initial SSSG, the second information is used to indicate the default SSSG or the initial SSSG; or,
in case that the first indication information cannot indicate disabling PDCCH monitoring skipping, the second information is used to indicate disabling PDCCH monitoring skipping.

In an embodiment, determining the PDCCH monitoring adaptation behavior based on the indication information for PDCCH monitoring adaptation includes:

in case that the indication information for PDCCH monitoring adaptation also includes second information, and PDCCH monitoring skipping associated information and/or SSSG switching associated information has been preconfigured, determining the PDCCH monitoring adaptation behavior based on the preconfigured PDCCH monitoring skipping associated information and/or the SSSG switching associated information, the second information and the first indication information,
where in case that the second information indicates the preconfigured PDCCH monitoring skipping associated information, the first indication information is in one-to-one correspondence with the preconfigured PDCCH monitoring skipping associated information; or,
in case that the second information indicates the preconfigured SSSG switching associated information, the first indication information is in one-to-one correspondence with the preconfigured SSSG switching associated information,
where the preconfigured PDCCH monitoring skipping associated information includes: disabling PDCCH monitoring skipping and/or skipping PDCCH monitoring for a set of target time intervals; and
the preconfigured SSSG switching associated information includes: not performing PDCCH monitoring in the SSSG and/or switching to or staying in a set of target SSSGs.

In an embodiment, in case that the second information is used to indicate that the target SSSG is the specific SSSG, or in case that the second information is used to indicate that the target time interval is the specific time period, the second information is carried in one or a combination of downlink control information (DCI) signaling, media access control (MAC) layer signaling or radio resource control (RRC) signaling.
In an embodiment, the second information carried in a downlink signaling includes one or a combination of the following:

additional or specific bit information in the DCI signaling or the MAC signaling or the RRC signaling indicates specific SSSG associated information, or indicates PDCCH monitoring skipping associated information; or,
a redefinition of a current information field in DCI signaling is used for indicating specific SSSG associated information, or indicating PDCCH monitoring skipping associated information,
where the specific SSSG associated information includes any of the following: not performing PDCCH monitoring in the SSSG, or switching to or staying in any SSSG in a set of target SSSGs, where the target SSSGs are different SSSGs; and
the PDCCH monitoring skipping associated information includes any of the following: disabling PDCCH monitoring skipping, skipping PDCCH monitoring for any time period in a set of target time intervals, where the target time intervals are different time periods.

In an embodiment, in case that the first indication information does not include the configuration of the default SSSG or the initial SSSG, and the second information is used to indicate the default SSSG or the initial SSSG, determining the PDCCH monitoring adaptation behavior based on the first indication information and the corresponding second information includes:
determining to switch to or stay in the default SSSG or the initial SSSG based on the first indication information and the corresponding second information.
In an embodiment, in case that the first indication information cannot indicate disabling PDCCH monitoring skipping, and the second information is used to indicate disabling PDCCH monitoring skipping, determining the PDCCH monitoring adaptation behavior based on the first indication information and the corresponding second information includes:
determining disabling PDCCH monitoring skipping based on the first indication information and the corresponding second information.
In an embodiment, the second information is used to indicate the default SSSG or the initial SSSG, or the second information is used to indicate disabling PDCCH monitoring skipping, and specific implementation mode includes one or a combination of the following:
a scheduling data field in downlink signaling is a specific configuration, additional or specific bit information in downlink signaling is target configuration information, or a redefinition indication of a current information field in downlink signaling.

In an embodiment, determining the PDCCH monitoring adaptation behavior based on the indication information for PDCCH monitoring adaptation includes:

in case that the target SSSG has been preconfigured to be a specific SSSG, determining to switch to or stay in the target SSSG based on the first indication information, where the target SSSG is a preconfigured specific SSSG; and in case that a target time interval for which the PDCCH monitoring is skipped has been preconfigured to be a first time interval, determining that a specific time period of the target time interval for which the PDCCH monitoring is skipped is a preconfigured first time interval based on the first indication information.

In an embodiment, in case that the second information is an association capability of the terminal device with respect to PDCCH monitoring adaptation or preference information of the terminal device, the first indication information is configured based on the second information.

In an embodiment, the first indication information is configured based on the second information through any one or a combination of the following modes:

in case that the second information is only supporting PDCCH monitoring skipping, the first indication information is a behavior indication associated with PDCCH monitoring skipping; or,
in case that the second information is SSSG switching other than Rel-16 SSSG switching, the first indication information is a behavior indication associated with SSSG switching; or,
in case that the second information is supporting PDCCH monitoring skipping and Rel-16 SSSG switching, the first indication information is a joint indication for both PDCCH monitoring skipping and SSSG switching,
where the Rel-16 SSSG switching includes switching to or staying in SSSGO, and switching to or staying in SSSG 1.

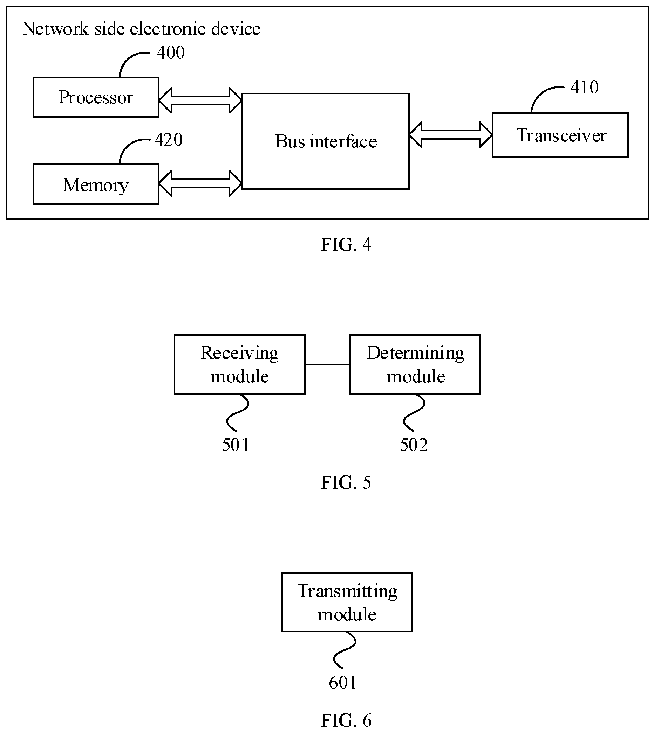

FIG. 4 is a schematic structural diagram of a network side electronic device according to an embodiment of the present application. As shown in FIG. 4, the network side electronic device includes a memory 420, a transceiver 410 and a processor 400, and the processor 400 and the memory 420 may also be physically separated.

The memory 420 is used to store a computer program, the transceiver 410 is used to transmit and receive data under control of the processor 400.

Specifically, the transceiver 410 is used to receive and transmit data under the control of the processor 400.

In FIG. 4, a bus architecture may include any number of interconnected buses and bridges, which are linked together through various circuits of one or more processors represented by processor 410 and one or more memories represented by the memory 420. The bus architecture may also link together various other circuits, such as peripherals, voltage regulators, and power management circuits. These are well known in the art and therefore will not be described further in the present application. The bus interface provides an interface. Transceiver 400 may be multiple elements, i.e., including a transmitter and a receiver, units for providing communication with various other devices over transmission media including wireless channels, wired channels, fiber optic cables, and the like.

The processor 400 is responsible for managing the bus architecture and general processing, and the memory 420 may store data used by the processor 410 when performing operations.

The processor 400 may be a CPU, an ASIC, a FPGA or a CPLD, and the processor may also use a multi-core architecture.

The processor 400 is configured to execute the method applied to the network side device provided by the embodiments of the present application according to the obtained executable instructions by calling the computer program stored in the memory 420, for example:

transmitting indication information for PDCCH monitoring adaptation, wherein the indication information for PDCCH monitoring adaptation comprises first indication information,
where the first indication information is any of the following: disabling PDCCH monitoring skipping, skipping PDCCH monitoring for a target time interval, or switching to or staying in a target search space set group (SSSG), and the first indication information is used to determine a PDCCH monitoring adaptation behavior.

In an embodiment, the PDCCH monitoring adaptation behavior at least includes: disabling PDCCH monitoring skipping, skipping PDCCH monitoring for a target time interval, or switching to or staying in a target SSSG, where the target time interval is a specific time period, and the target SSSG is a specific SSSG.

In an embodiment, the indication information for PDCCH monitoring adaptation also includes second information, and the first indication information and the second information have the following corresponding relationships:

in case that the first indication information is switching to or staying in the target SSSG, the second information is used to indicate that the target SSSG is a specific SSSG; or,

in case that the first indication information is skipping PDCCH monitoring for the target time interval, the second information is used to indicate that the target time interval is a specific time period; or,

in case that the first indication information does not include a configuration of a default SSSG or an initial SSSG, the second information is used to indicate the default SSSG or the initial SSSG; or,

in case that the first indication information cannot indicate disabling PDCCH monitoring skipping, the second information is used to indicate disabling PDCCH monitoring skipping,

where the first indication information and the corresponding second information are used to determine the PDCCH monitoring adaptation behavior.

In an embodiment, the method further include:
determining a configuration of the first indication information based on an association capability of a terminal device with respect to PDCCH monitoring adaptation or preference information of a terminal device configured in the second information.

In an embodiment, a mode for determining the configuration of the first indication information based on the association capability of the terminal device with respect to PDCCH monitoring adaptation or the preference information of the terminal device configured in the second information includes one or a combination of the following:

in case that the second information is only supporting PDCCH monitoring skipping, the first indication information is a behavior indication associated with PDCCH monitoring skipping; or,

in case that the second information is SSSG switching other than Rel-16 SSSG switching, the first indication information is a behavior indication associated with SSSG switching; or,

in case that the second information is supporting PDCCH monitoring skipping and Rel-16 SSSG switching, the first indication information is a joint indication for both PDCCH monitoring skipping and SSSG switching,

where the Rel-16 SSSG switching includes switching to or staying in SSSGO, and switching to or staying in SSSG 1.

In an embodiment, transmitting the indication information for PDCCH monitoring adaptation including the first indication information includes:
in case that the indication information for PDCCH monitoring adaptation also includes second information, and PDCCH monitoring skipping associated information and/or SSSG switching associated information has been preconfigured, the preconfigured PDCCH monitoring skipping associated information and/or the SSSG switching associated information, the second information and the first indication information have the following corresponding relationships:

in case that the second information indicates the preconfigured PDCCH monitoring skipping associated information, the first indication information is in one-to-one correspondence with the preconfigured PDCCH monitoring skipping associated information; or,

in case that the second information indicates the preconfigured SSSG switching associated information, the first indication information is in one-to-one correspondence with the preconfigured SSSG switching associated information,

where the preconfigured PDCCH monitoring skipping associated information includes: disabling PDCCH monitoring skipping and/or skipping PDCCH monitoring for a set of target time intervals; and

the preconfigured SSSG switching associated information includes: not performing PDCCH monitoring in the SSSG and/or switching to or staying in a set of target SSSGs.

It should be noted that the above-mentioned terminal device and the network side device provided by the embodiments of the present application may implement all the method steps implemented by the above-mentioned method embodiments, and may achieve the same effect. The same parts and beneficial effects as the same method embodiments are not repeated in the present application.

FIG. 5 is a schematic structural diagram of a terminal apparatus for determining a PDCCH monitoring adaptation behavior according to an embodiment of the present application. As shown in FIG. 5, the terminal apparatus includes:

a receiving module 501, used for receiving indication information for PDCCH monitoring adaptation transmitted from a network side device, where the indication information for PDCCH monitoring adaptation includes first indication information; and

a determining module 502, used for determining the PDCCH monitoring adaptation behavior based on the indication information for PDCCH monitoring adaptation,

where the first indication information is any of the following: disabling PDCCH monitoring skipping, skipping PDCCH monitoring for a target time interval, or switching to or staying in a target search space set group (SSSG).

In an embodiment, the PDCCH monitoring adaptation behavior at least includes: disabling PDCCH monitoring skipping, skipping PDCCH monitoring for a target time interval, or switching to or staying in a target SSSG,
where the target time interval is a specific time period, and the target SSSG is a specific SSSG.

In an embodiment, the PDCCH monitoring skipping the target time interval is applied to any of the following scenarios:
a first search space set where the first indication information is associated, a specific search space set, a preconfigured specific SSSG or a currently activated band width part (BWP).

In an embodiment, the determining module 502 is further used for:

in case that the indication information for PDCCH monitoring adaptation also includes second information, determining the PDCCH monitoring adaptation behavior based on the first indication information and the corresponding second information,
where in case that the first indication information is switching to or staying in a target SSSG, the second information is used to indicate that the target SSSG is a specific SSSG; or,
in case that the first indication information is skipping PDCCH monitoring for the target time interval, the second information is used to indicate that the target time interval is a specific time period; or,
in case that the first indication information does not include a configuration of a default SSSG or an initial SSSG, the second information is used to indicate the default SSSG or the initial SSSG; or,
in case that the first indication information cannot indicate disabling PDCCH monitoring skipping, the second information is used to indicate disabling PDCCH monitoring skipping.

In an embodiment, the determining module 502 is further used for:

in case that the indication information for PDCCH monitoring adaptation also includes second information, and PDCCH monitoring skipping associated information and/or SSSG switching associated information has been preconfigured, determining the PDCCH monitoring adaptation behavior based on the preconfigured PDCCH monitoring skipping associated information and/or the SSSG switching associated information, the second information and the first indication information,
where in case that the second information indicates the preconfigured PDCCH monitoring skipping associated information, the first indication information is in one-to-one correspondence with the preconfigured PDCCH monitoring skipping associated information; or,
in case that the second information indicates the preconfigured SSSG switching associated information, the first indication information is in one-to-one correspondence with the preconfigured SSSG switching associated information,
where the preconfigured PDCCH monitoring skipping associated information includes: disabling PDCCH monitoring skipping and/or skipping PDCCH monitoring for a set of target time intervals; and
the preconfigured SSSG switching associated information includes: not performing PDCCH monitoring in the SSSG and/or switching to or staying in a set of target SSSGs.

In an embodiment, in case that the second information is used to indicate that the target SSSG is the specific SSSG, or in case that the second information is used to indicate that the target time interval is the specific time period, the second information is carried in one or a combination of downlink control information (DCI) signaling, media access control (MAC) layer signaling or radio resource control (RRC) signaling.

In an embodiment, the second information carried in a downlink signaling includes one or a combination of the following:

additional or specific bit information in the DCI signaling or the MAC signaling or the RRC signaling indicates specific SSSG associated information, or indicates PDCCH monitoring skipping associated information; or,
a redefinition of a current information field in DCI signaling is used for indicating specific SSSG associated information, or indicating PDCCH monitoring skipping associated information,
where the specific SSSG associated information includes any of the following: not performing PDCCH monitoring in the SSSG, or switching to or staying in any SSSG in a set of target SSSGs, where the target SSSGs are different SSSGs; and
the PDCCH monitoring skipping associated information includes any of the following: disabling PDCCH monitoring skipping, skipping PDCCH monitoring for any time period in a set of target time intervals, where the target time intervals are different time periods.

In an embodiment, the determining module 502 is further used for:

in case that the first indication information does not include the configuration of the default SSSG or the initial SSSG, and the second information is used to indicate the default SSSG or the initial SSSG, determining to switch to or staying in the default SSSG or the initial SSSG based on the first indication information and the corresponding second information.

In an embodiment, the determining module 502 is further used for:

in case that the first indication information cannot indicate disabling PDCCH monitoring skipping, and the second information is used to indicate disabling PDCCH monitoring skipping, determining disabling PDCCH monitoring skipping based on the first indication information and the corresponding second information

In an embodiment, the second information is used to indicate the default SSSG or the initial SSSG, or the second information is used to indicate disabling PDCCH monitoring skipping, and implementation mode includes one or a combination of the following:

a scheduling data field in downlink signaling is a specific configuration, additional or specific bit information in downlink signaling is target configuration information, or a redefinition indication of a current information field in downlink signaling.

In an embodiment, the determining module 502 is further used for:

in case that the target SSSG has been preconfigured to be a specific SSSG, determining to switch to or stay in the target SSSG based on the first indication information, where the target SSSG is a preconfigured specific SSSG; and

in case that a target time interval for which the PDCCH monitoring is skipped has been preconfigured to be a first time interval, determining that a specific time period of the target time interval for which the PDCCH monitoring is skipped is a preconfigured first time interval based on the first indication information.

In an embodiment, in case that the second information is an association capability of the terminal device with respect to PDCCH monitoring adaptation or preference information of the terminal device, the first indication information is configured based on the second information.

In an embodiment, the first indication information is configured based on the second information through any one or a combination of the following:

in case that the second information is only supporting PDCCH monitoring skipping, the first indication information is a behavior indication associated with PDCCH monitoring skipping; or,

in case that the second information is SSSG switching other than Rel-16 SSSG switching, the first indication information is a behavior indication associated with SSSG switching; or,

in case that the second information is supporting PDCCH monitoring skipping and Rel-16 SSSG switching, the first indication information is a joint indication for both PDCCH monitoring skipping and SSSG switching,

where the Rel-16 SSSG switching includes switching to or staying in SSSGO, and switching to or staying in SSSG 1.

FIG. 6 is a schematic structural diagram of a network side apparatus for determining a PDCCH monitoring adaptation behavior according to an embodiment of the present application. As shown in FIG. 6, the network side apparatus includes:

a transmitting module 601, used for transmitting indication information for PDCCH monitoring adaptation, where the indication information for PDCCH monitoring adaptation includes first indication information,

where the first indication information is any of the following: disabling PDCCH monitoring skipping, skipping PDCCH monitoring for a target time interval, or switching to or staying in a target search space set group (SSSG), and the first indication information is used to determine the PDCCH monitoring adaptation behavior.

In an embodiment, the PDCCH monitoring adaptation behavior at least includes: disabling PDCCH monitoring skipping, skipping PDCCH monitoring for a target time interval, or switching to or staying in a target SSSG,

where the target time interval is a specific time period, and the target SSSG is a specific SSSG.

In an embodiment, the transmitting module 601 is further used for transmitting the indication information for PDCCH monitoring adaptation including second information, and the first indication information and the second information have the following corresponding relationships:

in case that the first indication information is switching to or staying in the target SSSG, the second information is used to indicate that the target SSSG is a specific SSSG; or,

in case that the first indication information is skipping PDCCH monitoring for the target time interval, the second information is used to indicate that the target time interval is a specific time period; or,

in case that the first indication information does not include a configuration of a default SSSG or an initial SSSG, the second information is used to indicate the default SSSG or the initial SSSG; or,

in case that the first indication information cannot indicate disabling PDCCH monitoring skipping, the second information is used to indicate disabling PDCCH monitoring skipping,
where the first indication information and the corresponding second information are used to determine the PDCCH monitoring adaptation behavior.

In an embodiment, the network side apparatus further includes a second determining module 602, used for determining a configuration of the first indication information based on an association capability of a terminal device with respect to PDCCH monitoring adaptation or preference information of a terminal device configured in the second information.

In an embodiment, a mode for determining the configuration of the first indication information based on the association capability of the terminal device with respect to PDCCH monitoring adaptation or the preference information of the terminal device configured in the second information includes one or a combination of the following:

in case that the second information is only supporting PDCCH monitoring skipping, the first indication information is a behavior indication associated with PDCCH monitoring skipping; or,
in case that the second information is SSSG switching other than Rel-16 SSSG switching, the first indication information is a behavior indication associated with SSSG switching; or,
in case that the second information is supporting PDCCH monitoring skipping and Rel-16 SSSG switching, the first indication information is a joint indication for both PDCCH monitoring skipping and SSSG switching,
where the Rel-16 SSSG switching includes switching to or staying in SSSG0, and switching to or staying in SSSG1.

In an embodiment, the transmitting module 601 is further used for transmitting the indication information for PDCCH monitoring adaptation including second information, PDCCH monitoring skipping associated information and/or SSSG switching associated information has been preconfigured, the preconfigured PDCCH monitoring skipping associated information and/or the SSSG switching associated information, and the second information and the first indication information have the following corresponding relationships:

in case that the second information indicates the preconfigured PDCCH monitoring skipping associated information, the first indication information is in one-to-one correspondence with the preconfigured PDCCH monitoring skipping associated information; or,
in case that the second information indicates the preconfigured SSSG switching associated information, the first indication information is in one-to-one correspondence with the preconfigured SSSG switching associated information,
where the preconfigured PDCCH monitoring skipping associated information includes: disabling PDCCH monitoring skipping and/or skipping PDCCH monitoring for a set of target time intervals; and
the preconfigured SSSG switching associated information includes: not performing PDCCH monitoring in the SSSG and/or switching to or staying in a set of target SSSGs.

It should be noted that, the division of units/modules in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a computer readable storage medium. Based on such understanding, the solutions of the present application in essence or a part of the solutions that contributes to the related art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as U disk, mobile hard disk, read-only memory (ROM), random access memory (RAM), magnetic disk, or optical disk.

It should be noted that the above-mentioned apparatuses provided by the embodiments of the present application may implement all the method steps implemented by the above-mentioned method embodiments, and may achieve the same effect. The same parts and beneficial effects as the same method embodiments are not repeated in the present application.

An embodiment of the present application further provides a processor-readable storage medium. The processor-readable storage medium stores a computer program. The computer program is used to cause the processor to perform methods for determining the PDCCH monitoring adaptation behavior described above, including:

receiving indication information for PDCCH monitoring adaptation transmitted from a network side device, where the indication information for PDCCH monitoring adaptation includes first indication information; and

determining a PDCCH monitoring adaptation behavior based on the indication information for PDCCH monitoring adaptation,

where the first indication information is any of the following: disabling PDCCH monitoring skipping, skipping PDCCH monitoring for a target time interval, or switching to or staying in a target search space set group (SSSG).

An embodiment of the present application further provides a processor-readable storage medium. The processor-readable storage medium stores a computer program. The computer program is used to cause the processor to perform methods for determining the PDCCH monitoring adaptation behavior described above, including:

transmitting indication information for PDCCH monitoring adaptation, where the indication information for PDCCH monitoring adaptation includes first indication information,

where the first indication information is any of the following: disabling PDCCH monitoring skipping, skipping PDCCH monitoring for a target time interval, or switching to or staying in a target search space set group (SSSG), and the first indication information is used to determine the PDCCH monitoring adaptation behavior.

It should be noted that the processor-readable storage medium may be any available medium or data storage device that may be accessed by the processor, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

The solutions according to the embodiments of the present application may be applicable to various systems, especially 5G systems. For example, applicable systems may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a user equipment and a network side device. The system may also include a core network part, such as an evolved packet system (EPS), a 5G system (5GS), and the like.

The network side device in the embodiments of the present application may be a base station, and the base station may include multiple cells providing services for the terminal. Depending on the specific application, the network side device may also be called an access point, or may be a device in the access network that communicates with radio terminal through one or more sectors on the air interface, or other names. Network device may be used to exchange received air frames with internet protocol (IP) packets, and act as a router between radio terminal and the rest of the access network, and the rest of the access network may include an IP communication network. The network side device may also coordinate attribute management for the air interface. For example, the network device in the embodiments of the present application may be a base transceiver station (BTS) in a global system for mobile communications (GSM) or a code division multiple access (CDMA), may also be a node B in a wide-band code division multiple access (WCDMA), may also be an evolutional node B (eNB or e-Node B) in a long term evolution (LTE) system, a 5G base station (gNB) in 5G network architecture (next generation system), may also be a Home evolved Node B (HeNB), a relay node (relay node), a femto, a pico base station (pico), etc., which are not limited in the embodiments of the present application. In some network structures, a network device may include a centralized unit (CU) node and a distributed unit (DU) node, and the centralized unit and the distributed unit may also be geographically separated.

The terminal in the embodiments of the present application may be a device that provides voice and/or data connectivity to a user, a handheld device with a radio connection function, or other processing device connected to a radio modem. In different systems, the names of the terminal may be different. For example, in the 5G system, the terminal may be called as user equipment (UE). A radio terminal may communicate with one or more core networks (CN) via a radio access network (RAN), and the radio terminal may be a mobile terminal, such as a mobile phone (or "cellular "phone) and computers with mobile terminal, e.g., a portable mobile device, a pocket-sized mobile device, a hand-held mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A radio terminal may also be called a system, a subscriber unit, a subscriber station, a mobile station, a mobile, a remote station, an access point, a remote terminal, an access terminal, a user terminal, a user agent, and a user device, which are not limited in the embodiments of the present application.

Multi-input multi-output (MIMO) transmission may be performed between the network device and the terminal using one or more antennas and the MIMO transmission may be single user MIMO (SU-MIMO) or multiple user MIMO (MU-MIMO). According to the form and number of antenna combinations, MIMO transmission may be 2D-MIMO, 3D-MIMO, FD-MIMO, or massive-MIMO, and may also be diversity transmission, precoding transmission, or beamforming transmission.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made to the present application without departing from the scope of the present application. Thus, provided that these modifications and variations of the present application fall within the scope of the claims of the present application and their equivalents, the present application is also intended to cover such modifications and variations.

**Claims**

1. A method for determining a physical downlink control channel, PDCCH, monitoring adaptation behavior, applied to a terminal device, comprising:

   receiving indication information for PDCCH monitoring adaptation transmitted from a network side device, wherein the indication information for PDCCH monitoring adaptation comprises first indication information; and
   determining a PDCCH monitoring adaptation behavior based on the indication information for PDCCH monitoring adaptation,
   wherein the first indication information is any of the following: disabling PDCCH monitoring skipping, skipping PDCCH monitoring for a target time interval, or switching to or staying in a target search space set group, SSSG.

2. The method of claim 1, wherein the PDCCH monitoring adaptation behavior at least comprises: disabling PDCCH monitoring skipping, skipping PDCCH monitoring for a target time interval, or switching to or staying in a target SSSG, wherein the target time interval is a specific time period, and the target SSSG is a specific SSSG.

3. The method of claim 2, wherein skipping PDCCH monitoring for the target time interval is applied to any of the following scenarios:
   a first search space set where the first indication information is associated, a specific search space set, a preconfigured specific SSSG or a currently activated band width part, BWP.

4. The method of claim 1, wherein determining the PDCCH monitoring adaptation behavior based on the indication information for PDCCH monitoring adaptation comprises:

   in case that the indication information for PDCCH monitoring adaptation also comprises second information, determining the PDCCH monitoring adaptation behavior based on the first indication information and the corresponding second information,

wherein in case that the first indication information is switching to or staying in the target SSSG, the second information is used to indicate that the target SSSG is a specific SSSG; or,

in case that the first indication information is skipping PDCCH monitoring for the target time interval, the second information is used to indicate that the target time interval is a specific time period; or,

in case that the first indication information does not comprise a configuration of a default SSSG or an initial SSSG, the second information is used to indicate the default SSSG or the initial SSSG; or,

in case that the first indication information cannot indicate disabling PDCCH monitoring skipping, the second information is used to indicate disabling PDCCH monitoring skipping.

5. The method of claim 1, wherein determining the PDCCH monitoring adaptation behavior based on the indication information for PDCCH monitoring adaptation comprises:

in case that the indication information for PDCCH monitoring adaptation also comprises second information, and PDCCH monitoring skipping associated information and/or SSSG switching associated information has been preconfigured, determining the PDCCH monitoring adaptation behavior based on the preconfigured PDCCH monitoring skipping associated information and/or the SSSG switching associated information, the second information and the first indication information,

wherein in case that the second information indicates the preconfigured PDCCH monitoring skipping associated information, the first indication information is in one-to-one correspondence with the preconfigured PDCCH monitoring skipping associated information; or,

in case that the second information indicates the preconfigured SSSG switching associated information, the first indication information is in one-to-one correspondence with the preconfigured SSSG switching associated information,

wherein the preconfigured PDCCH monitoring skipping associated information comprises: disabling PDCCH monitoring skipping and/or skipping PDCCH monitoring for a set of target time intervals; and

the preconfigured SSSG switching associated information comprises: not performing PDCCH monitoring in the SSSG and/or switching to or staying in a set of target SSSGs.

6. The method of claim 4, wherein in case that the second information is used to indicate that the target SSSG is the specific SSSG, or in case that the second information is used to indicate that the target time interval is the specific time period, the second information is carried in one or a combination of downlink control information, DCI, signaling, media access control, MAC, layer signaling or radio resource control, RRC, signaling.

7. The method of claim 6, wherein the second information carried in a downlink signaling comprises one or a combination of the following:

additional or specific bit information in the DCI signaling or the MAC signaling or the RRC signaling indicates specific SSSG associated information or PDCCH monitoring skipping associated information; or,

a redefinition of a current information field in the DCI signaling is used for indicating specific SSSG associated information or PDCCH monitoring skipping associated information,

wherein the SSSG switching associated information comprises any of the following: not performing PDCCH monitoring in the SSSG, or switching to or staying in any SSSG in a set of target SSSGs, wherein the target SSSGs are different SSSGs; and

the PDCCH monitoring skipping associated information comprises any of the following: disabling PDCCH monitoring skipping, skipping PDCCH monitoring for any time period in a set of target time intervals, wherein the target time intervals are different time periods.

8. The method of claim 4, wherein in case that the first indication information does not comprise the configuration of the default SSSG or the initial SSSG, and the second information is used to indicate the default SSSG or the initial SSSG, determining the PDCCH monitoring adaptation behavior based on the first indication information and the corresponding second information comprises:
determining to switch to or stay in the default SSSG or the initial SSSG based on the first indication information and the corresponding second information.

9. The method of claim 4, wherein in case that the first indication information cannot indicate disabling PDCCH monitoring skipping, and the second information is used to indicate disabling PDCCH monitoring skipping, determining the PDCCH monitoring adaptation behavior based on the first indication information and the corresponding second information comprises:

determining disabling PDCCH monitoring skipping based on the first indication information and the corresponding second information.

10. The method of claim 4, wherein the second information is used to indicate the default SSSG or the initial SSSG, or the second information is used to indicate disabling PDCCH monitoring skipping, and implementation mode comprises one or a combination of the following:

a scheduling data field in downlink signaling is a specific configuration, additional or specific bit information in downlink signaling is target configuration information, or a redefinition indication of a current information field in downlink signaling.

11. The method of claim 3, wherein determining the PDCCH monitoring adaptation behavior based on the indication information for PDCCH monitoring adaptation comprises:

in case that the target SSSG has been preconfigured to be a specific SSSG, determining to switch to or stay in the target SSSG based on the first indication information, wherein the target SSSG is a preconfigured specific SSSG; and

in case that a target time interval for which the PDCCH monitoring is skipped has been preconfigured to be a first time interval, determining that a specific time period of the target time interval for which the PDCCH monitoring is skipped is a preconfigured first time interval based on the first indication information.

12. The method of claim 4, wherein in case that the second information is an association capability of the terminal device with respect to PDCCH monitoring adaptation or preference information of the terminal device, the first indication information is configured based on the second information.

13. The method of claim 12, wherein the first indication information is configured based on the second information through any one or a combination of the following modes:

in case that the second information is only supporting PDCCH monitoring skipping, the first indication information is a behavior indication associated with PDCCH monitoring skipping; or,

in case that the second information is SSSG switching other than Rel-16 SSSG switching, the first indication information is a behavior indication associated with SSSG switching; or,

in case that the second information is supporting PDCCH monitoring skipping and Rel-16 SSSG switching, the first indication information is a joint indication for both PDCCH monitoring skipping and SSSG switching, wherein the Rel-16 SSSG switching comprises switching to or staying in SSSGO, and switching to or staying in SSSG 1.

14. A method for determining a physical downlink control channel, PDCCH, monitoring adaptation behavior, applied to a network side device, comprising:

transmitting indication information for PDCCH monitoring adaptation, wherein the indication information for PDCCH monitoring adaptation comprises first indication information,

wherein the first indication information is any of the following: disabling PDCCH monitoring skipping, skipping PDCCH monitoring for a target time interval, or switching to or staying in a target search space set group, SSSG, and the first indication information is used to determine a PDCCH monitoring adaptation behavior.

15. The method of claim 14, wherein the PDCCH monitoring adaptation behavior at least comprises: disabling PDCCH monitoring skipping, skipping PDCCH monitoring for a target time interval, or switching to or staying in a target SSSG, wherein the target time interval is a specific time period, and the target SSSG is a specific SSSG.

16. The method of claim 14, wherein the indication information for PDCCH monitoring adaptation also comprises second information, and the first indication information and the second information have the following corresponding relationships:

in case that the first indication information is switching to or staying in the target SSSG, the second information is used to indicate that the target SSSG is a specific SSSG; or,

in case that the first indication information is skipping PDCCH monitoring for the target time interval, the second information is used to indicate that the target time interval is a specific time period; or,

in case that the first indication information does not comprise a configuration of a default SSSG or an initial SSSG, the second information is used to indicate the default SSSG or the initial SSSG; or,

in case that the first indication information cannot indicate disabling PDCCH monitoring skipping, the second information is used to indicate disabling PDCCH monitoring skipping,

wherein the first indication information and the corresponding second information are used to determine the PDCCH monitoring adaptation behavior.

17. The method of claim 16, further comprising:

determining a configuration of the first indication information based on an association capability of a terminal device with respect to PDCCH monitoring adaptation or preference information of a terminal device configured in the second information.

18. The method of claim 17, wherein a mode for determining the configuration of the first indication information based on the association capability of the terminal device with respect to PDCCH monitoring adaptation or the preference information of the terminal device configured in the second information comprises one or a combination of the following:

in case that the second information is only supporting PDCCH monitoring skipping, the first indication information is a behavior indication associated with PDCCH monitoring skipping; or,

in case that the second information is SSSG switching other than Rel-16 SSSG switching, the first indication information is a behavior indication associated with SSSG switching; or,

in case that the second information is supporting PDCCH monitoring skipping and Rel-16 SSSG switching, the first indication information is a joint indication for both PDCCH monitoring skipping and SSSG switching,

wherein the Rel-16 SSSG switching comprises switching to or staying in SSSGO, and switching to or staying in SSSG 1.

19. The method of claim 14, wherein transmitting the indication information for PDCCH monitoring adaptation comprising the first indication information comprises:

in case that the indication information for PDCCH monitoring adaptation also comprises second information, and PDCCH monitoring skipping associated information and/or SSSG switching associated information has been preconfigured, the preconfigured PDCCH monitoring skipping associated information and/or the SSSG switching associated information, the second information and the first indication information have the following corresponding relationships:

in case that the second information indicates the preconfigured PDCCH monitoring skipping associated information, the first indication information is in one-to-one correspondence with the preconfigured PDCCH monitoring skipping associated information; or,

in case that the second information indicates the preconfigured SSSG switching associated information, the first indication information is in one-to-one correspondence with the preconfigured SSSG switching associated information,

wherein the preconfigured PDCCH monitoring skipping associated information comprises: disabling PDCCH monitoring skipping and/or skipping PDCCH monitoring for a set of target time intervals; and

the preconfigured SSSG switching associated information comprises: not performing PDCCH monitoring in the SSSG and/or switching to or staying in a set of target SSSGs.

20. A terminal electronic device, comprising a memory, a transceiver and a processor,

wherein the memory is used to store a computer program, the transceiver is used to transmit and receive data under control of the processor, and the processor is used to execute the computer program stored in the memory and perform the following operations of

receiving indication information for physical downlink control channel, PDCCH, monitoring adaptation transmitted from a network side device, wherein the indication information for PDCCH monitoring adaptation comprises first indication information; and

determining a PDCCH monitoring adaptation behavior based on the indication information for PDCCH monitoring adaptation,

wherein the first indication information is any of the following: disabling PDCCH monitoring skipping, skipping PDCCH monitoring for a target time interval, or switching to or staying in a target search space set group, SSSG.

21. The terminal electronic device of claim 20, wherein the PDCCH monitoring adaptation behavior at least comprises: disabling PDCCH monitoring skipping, skipping PDCCH monitoring for a target time interval, or switching to or staying in a target SSSG,
wherein the target time interval is a specific time period, and the target SSSG is a specific SSSG.

22. The terminal electronic device of claim 21, wherein skipping PDCCH monitoring for the target time interval is applied to any of the following scenarios:
a first search space set where the first indication information is associated, a specific search space set, a preconfigured specific SSSG or a currently activated band width part, BWP.

23. The terminal electronic device of claim 20, wherein determining the PDCCH monitoring adaptation behavior based on the indication information for PDCCH monitoring adaptation comprises:

in case that the indication information for PDCCH monitoring adaptation also comprises second information, determining the PDCCH monitoring adaptation behavior based on the first indication information and the corresponding second information,
wherein in case that the first indication information is switching to or staying in the target SSSG, the second information is used to indicate that the target SSSG is a specific SSSG; or,
in case that the first indication information is skipping PDCCH monitoring for the target time interval, the second information is used to indicate that the target time interval is a specific time period; or,
in case that the first indication information does not comprise a configuration of a default SSSG or an initial SSSG, the second information is used to indicate the default SSSG or the initial SSSG; or,
in case that the first indication information cannot indicate disabling PDCCH monitoring skipping, the second information is used to indicate disabling PDCCH monitoring skipping.

24. The terminal electronic device of claim 20, wherein determining the PDCCH monitoring adaptation behavior based on the indication information for PDCCH monitoring adaptation comprises:

in case that the indication information for PDCCH monitoring adaptation also comprises second information, and PDCCH monitoring skipping associated information and/or SSSG switching associated information has been preconfigured, determining the PDCCH monitoring adaptation behavior based on the preconfigured PDCCH monitoring skipping associated information and/or the SSSG switching associated information, the second information and the first indication information,
wherein in case that the second information indicates the preconfigured PDCCH monitoring skipping associated information, the first indication information is in one-to-one correspondence with the preconfigured PDCCH monitoring skipping associated information; or,
in case that the second information indicates the preconfigured SSSG switching associated information, the first indication information is in one-to-one correspondence with the preconfigured SSSG switching associated information,
wherein the preconfigured PDCCH monitoring skipping associated information comprises: disabling PDCCH monitoring skipping and/or skipping PDCCH monitoring for a set of target time intervals; and
the preconfigured SSSG switching associated information comprises: not performing PDCCH monitoring in the SSSG and/or switching to or staying in a set of target SSSGs.

25. The terminal electronic device of claim 23, wherein in case that the second information is used to indicate that the target SSSG is the specific SSSG, or in case that the second information is used to indicate that the target time interval is the specific time period, the second information is carried in one or a combination of downlink control information, DCI, signaling, media access control, MAC, layer signaling or radio resource control, RRC, signaling.

26. The terminal electronic device of claim 25, wherein the second information carried in a downlink signaling comprises one or a combination of the following:

additional or specific bit information in the DCI signaling or the MAC signaling or the RRC signaling indicates specific SSSG associated information or PDCCH monitoring skipping associated information; or,
a redefinition of a current information field in the DCI signaling is used for indicating specific SSSG associated information or PDCCH monitoring skipping associated information,
wherein the specific SSSG associated information comprises any of the following: not performing PDCCH monitoring in the SSSG, or switching to or staying in any SSSG in a set of target SSSGs, wherein the target SSSGs are different SSSGs; and

the PDCCH monitoring skipping associated information comprises any of the following: disabling PDCCH monitoring skipping, skipping PDCCH monitoring for any time period in a set of target time intervals, wherein the target time intervals are different time periods.

27. The terminal electronic device of claim 23, wherein in case that the first indication information does not comprise the configuration of the default SSSG or the initial SSSG, and the second information is used to indicate the default SSSG or the initial SSSG, determining the PDCCH monitoring adaptation behavior based on the first indication information and the corresponding second information comprises:

determining to switch to or stay in the default SSSG or the initial SSSG based on the first indication information and the corresponding second information.

28. The terminal electronic device of claim 23, wherein in case that the first indication information cannot indicate disabling PDCCH monitoring skipping, and the second information is used to indicate disabling PDCCH monitoring skipping, determining the PDCCH monitoring adaptation behavior based on the first indication information and the corresponding second information comprises:

determining disabling PDCCH monitoring skipping based on the first indication information and the corresponding second information.

29. The terminal electronic device of claim 23, wherein the second information is used to indicate the default SSSG or the initial SSSG, or the second information is used to indicate disabling PDCCH monitoring skipping, and implementation mode comprises one or a combination of the following:

a scheduling data field in downlink signaling is a specific configuration, additional or specific bit information in downlink signaling is target configuration information, or a redefinition indication of a current information field in downlink signaling.

30. The terminal electronic device of claim 22, wherein determining the PDCCH monitoring adaptation behavior based on the indication information for PDCCH monitoring adaptation comprises:

in case that the target SSSG has been preconfigured to be a specific SSSG, determining to switch to or stay in the target SSSG based on the first indication information, wherein the target SSSG is a preconfigured specific SSSG; and

in case that a target time interval for which the PDCCH monitoring is skipped has been preconfigured to be a first time interval, determining that a specific time period of the target time interval for which the PDCCH monitoring is skipped is a preconfigured first time interval based on the first indication information.

31. The terminal electronic device of claim 23, wherein in case that the second information is an association capability of the terminal device with respect to PDCCH monitoring adaptation or preference information of the terminal device, the first indication information is configured based on the second information.

32. The terminal electronic device of claim 31, wherein the first indication information is configured based on the second information through any one or a combination of the following modes:

in case that the second information is only supporting PDCCH monitoring skipping, the first indication information is a behavior indication associated with PDCCH monitoring skipping; or,

in case that the second information is SSSG switching other than Rel-16 SSSG switching, the first indication information is a behavior indication associated with SSSG switching; or,

in case that the second information is supporting PDCCH monitoring skipping and Rel-16 SSSG switching, the first indication information is a joint indication for both PDCCH monitoring skipping and SSSG switching,

wherein the Rel-16 SSSG switching comprises switching to or staying in SSSGO, and switching to or staying in SSSG 1.

33. A network side electronic device, comprising a memory, a transceiver and a processor,

wherein the memory is used to store a computer program, the transceiver is used to transmit and receive data under control of the processor, and the processor is used to execute the computer program stored in the memory and perform the following operation of:

transmitting indication information for physical downlink control channel, PDCCH, monitoring adaptation, wherein the indication information for PDCCH monitoring adaptation comprises first indication information,
wherein the first indication information is any of the following: disabling PDCCH monitoring skipping, skipping PDCCH monitoring for a target time interval, or switching to or staying in a target search space set group, SSSG, and the first indication information is used to determine a PDCCH monitoring adaptation behavior.

34. The network side electronic device of claim 33, wherein the PDCCH monitoring adaptation behavior at least comprises: disabling PDCCH monitoring skipping, skipping PDCCH monitoring for a target time interval, or switching to or staying in a target SSSG,
wherein the target time interval is a specific time period, and the target SSSG is a specific SSSG.

35. The network side electronic device of claim 33, wherein the indication information for PDCCH monitoring adaptation also comprises second information, and the first indication information and the second information have the following corresponding relationships:

in case that the first indication information is switching to or staying in the target SSSG, the second information is used to indicate that the target SSSG is a specific SSSG; or,
in case that the first indication information is skipping PDCCH monitoring for the target time interval, the second information is used to indicate that the target time interval is a specific time period; or,
in case that the first indication information does not comprise a configuration of a default SSSG or an initial SSSG, the second information is used to indicate the default SSSG or the initial SSSG; or,
in case that the first indication information cannot indicate disabling PDCCH monitoring skipping, the second information is used to indicate disabling PDCCH monitoring skipping,
wherein the first indication information and the corresponding second information are used to determine the PDCCH monitoring adaptation behavior.

36. The network side electronic device of claim 35, wherein the operations further comprise:
determining a configuration of the first indication information based on an association capability of a terminal device with respect to PDCCH monitoring adaptation or preference information of a terminal device configured in the second information.

37. The network side electronic device of claim 36, wherein a mode for determining the configuration of the first indication information based on the association capability of the terminal device with respect to PDCCH monitoring adaptation or the preference information of the terminal device configured in the second information comprises one or a combination of the following:

in case that the second information is only supporting PDCCH monitoring skipping, the first indication information is a behavior indication associated with PDCCH monitoring skipping; or,
in case that the second information is SSSG switching other than Rel-16 SSSG switching, the first indication information is a behavior indication associated with SSSG switching; or,
in case that the second information is supporting PDCCH monitoring skipping and Rel-16 SSSG switching, the first indication information is a joint indication for both PDCCH monitoring skipping and SSSG switching,
wherein the Rel-16 SSSG switching comprises switching to or staying in SSSGO, and switching to or staying in SSSG 1.

38. The network side electronic device of claim 33, wherein transmitting the indication information for PDCCH monitoring adaptation comprising the first indication information comprises:
in case that the indication information for PDCCH monitoring adaptation also comprises second information, and PDCCH monitoring skipping associated information and/or SSSG switching associated information has been preconfigured, the preconfigured PDCCH monitoring skipping associated information and/or the SSSG switching associated information, the second information and the first indication information have the following corresponding relationships:

in case that the second information indicates the preconfigured PDCCH monitoring skipping associated information, the first indication information is in one-to-one correspondence with the preconfigured PDCCH monitoring skipping associated information; or,
in case that the second information indicates the preconfigured SSSG switching associated information, the first indication information is in one-to-one correspondence with the preconfigured SSSG switching associated information,

wherein the preconfigured PDCCH monitoring skipping associated information comprises: disabling PDCCH monitoring skipping and/or skipping PDCCH monitoring for a set of target time intervals; and

the preconfigured SSSG switching associated information comprises: not performing PDCCH monitoring in the SSSG and/or switching to or staying in a set of target SSSGs.

39. A terminal apparatus for determining a physical downlink control channel, PDCCH, monitoring adaptation behavior, comprising:

a receiving module, used for receiving indication information for PDCCH monitoring adaptation transmitted from a network side device, wherein the indication information for PDCCH monitoring adaptation comprises first indication information; and

a determining module, used for determining a PDCCH monitoring adaptation behavior based on the indication information for PDCCH monitoring adaptation,

wherein the first indication information is any of the following: disabling PDCCH monitoring skipping, skipping PDCCH monitoring for a target time interval, or switching to or staying in a target search space set group, SSSG.

40. The terminal apparatus of claim 39, wherein the PDCCH monitoring adaptation behavior at least comprises: disabling PDCCH monitoring skipping, skipping PDCCH monitoring for a target time interval, or switching to or staying in a target SSSG,

wherein the target time interval is a specific time period, and the target SSSG is a specific SSSG.

41. The terminal apparatus of claim 40, wherein skipping PDCCH monitoring for the target time interval is applied to any of the following scenarios:

a first search space set where the first indication information is associated, a specific search space set, a preconfigured specific SSSG or a currently activated band width part, BWP.

42. The terminal apparatus of claim 39, wherein when determining the PDCCH monitoring adaptation behavior based on the indication information for PDCCH monitoring adaptation, the determining module is used for:

in case that the indication information for PDCCH monitoring adaptation also comprises second information, determining the PDCCH monitoring adaptation behavior based on the first indication information and the corresponding second information,

wherein in case that the first indication information is switching to or staying in the target SSSG, the second information is used to indicate that the target SSSG is a specific SSSG; or,

in case that the first indication information is skipping PDCCH monitoring for the target time interval, the second information is used to indicate that the target time interval is a specific time period; or,

in case that the first indication information does not comprise a configuration of a default SSSG or an initial SSSG, the second information is used to indicate the default SSSG or the initial SSSG; or,

in case that the first indication information cannot indicate disabling PDCCH monitoring skipping, the second information is used to indicate disabling PDCCH monitoring skipping.

43. The terminal apparatus of claim 39, wherein when determining the PDCCH monitoring adaptation behavior based on the indication information for PDCCH monitoring adaptation, the determining module is used for:

in case that the indication information for PDCCH monitoring adaptation also comprises second information, and PDCCH monitoring skipping associated information and/or SSSG switching associated information has been preconfigured, determining the PDCCH monitoring adaptation behavior based on the preconfigured PDCCH monitoring skipping associated information and/or the SSSG switching associated information, the second information and the first indication information,

wherein in case that the second information indicates the preconfigured PDCCH monitoring skipping associated information, the first indication information is in one-to-one correspondence with the preconfigured PDCCH monitoring skipping associated information; or,

in case that the second information indicates the preconfigured SSSG switching associated information, the first indication information is in one-to-one correspondence with the preconfigured SSSG switching associated information,

wherein the preconfigured PDCCH monitoring skipping associated information comprises: disabling PDCCH monitoring skipping and/or skipping PDCCH monitoring for a set of target time intervals; and

the preconfigured SSSG switching associated information comprises: not performing PDCCH monitoring in the SSSG and/or switching to or staying in a set of target SSSGs.

44. The terminal apparatus of claim 42, wherein in case that the second information is used to indicate that the target SSSG is the specific SSSG, or in case that the second information is used to indicate that the target time interval is the specific time period, the second information is carried in one or a combination of downlink control information, DCI, signaling, media access control, MAC, layer signaling or radio resource control, RRC, signaling.

45. The terminal apparatus of claim 44, wherein the second information carried in a downlink signaling comprises one or a combination of the following:

additional or specific bit information in the DCI signaling or the MAC signaling or the RRC signaling indicates specific SSSG associated information or PDCCH monitoring skipping associated information; or,
a redefinition of a current information field in the DCI signaling is used for indicating specific SSSG associated information or PDCCH monitoring skipping associated information,
wherein the specific SSSG associated information comprises any of the following: not performing PDCCH monitoring in the SSSG, or switching to or staying in any SSSG in a set of target SSSGs, wherein the target SSSGs are different SSSGs; and
the PDCCH monitoring skipping associated information comprises any of the following: disabling PDCCH monitoring skipping, skipping PDCCH monitoring for any time period in a set of target time intervals, wherein the target time intervals are different time periods.

46. The terminal apparatus of claim 42, wherein in case that the first indication information does not comprise the configuration of the default SSSG or the initial SSSG, and the second information is used to indicate the default SSSG or the initial SSSG, determining the PDCCH monitoring adaptation behavior based on the first indication information and the corresponding second information comprises:
determining to switch to or stay in the default SSSG or the initial SSSG based on the first indication information and the corresponding second information.

47. The terminal apparatus of claim 42, wherein in case that the first indication information cannot indicate disabling PDCCH monitoring skipping, and the second information is used to indicate disabling PDCCH monitoring skipping, determining the PDCCH monitoring adaptation behavior based on the first indication information and the corresponding second information comprises:
determining disabling PDCCH monitoring skipping based on the first indication information and the corresponding second information.

48. The terminal apparatus of claim 42, wherein the second information is used to indicate the default SSSG or the initial SSSG, or the second information is used to indicate disabling PDCCH monitoring skipping, and implementation mode comprises one or a combination of the following:
a scheduling data field in downlink signaling is a specific configuration, additional or specific bit information in downlink signaling is target configuration information, or a redefinition indication of a current information field in downlink signaling.

49. The terminal apparatus of claim 41, wherein determining the PDCCH monitoring adaptation behavior based on the indication information for PDCCH monitoring adaptation comprises:

in case that the target SSSG has been preconfigured to be a specific SSSG, determining to switch to or stay in the target SSSG based on the first indication information, wherein the target SSSG is a preconfigured specific SSSG; and
in case that a target time interval for which the PDCCH monitoring is skipped has been preconfigured to be a first time interval, determining that a specific time period of the target time interval for which the PDCCH monitoring is skipped is a preconfigured first time interval based on the first indication information.

50. The terminal apparatus of claim 42, wherein in case that the second information is an association capability of the terminal device with respect to PDCCH monitoring adaptation or preference information of the terminal device, the first indication information is configured based on the second information.

51. The terminal apparatus of claim 50, wherein the first indication information is configured based on the second information through any one or a combination of the following modes:

in case that the second information is only supporting PDCCH monitoring skipping, the first indication information is a behavior indication associated with PDCCH monitoring skipping; or,

in case that the second information is SSSG switching other than Rel-16 SSSG switching, the first indication information is a behavior indication associated with SSSG switching; or,

in case that the second information is supporting PDCCH monitoring skipping and Rel-16 SSSG switching, the first indication information is a joint indication for both PDCCH monitoring skipping and SSSG switching, wherein the Rel-16 SSSG switching comprises switching to or staying in SSSGO, and switching to or staying in SSSG 1.

52. A network side apparatus for determining a physical downlink control channel, PDCCH, monitoring adaptation behavior, comprising:

a transmitting module, use for transmitting indication information for PDCCH monitoring adaptation, wherein the indication information for PDCCH monitoring adaptation comprises first indication information,

wherein the first indication information is any of the following: disabling PDCCH monitoring skipping, skipping PDCCH monitoring for a target time interval, or switching to or staying in a target search space set group, SSSG, and the first indication information is used to determine a PDCCH monitoring adaptation behavior.

53. The network side apparatus of claim 52, wherein the PDCCH monitoring adaptation behavior at least comprises: disabling PDCCH monitoring skipping, skipping PDCCH monitoring for a target time interval, or switching to or staying in a target SSSG,

wherein the target time interval is a specific time period, and the target SSSG is a specific SSSG.

54. The network side apparatus of claim 52, wherein the indication information for PDCCH monitoring adaptation also comprises second information, and the first indication information and the second information have the following corresponding relationships:

in case that the first indication information is switching to or staying in the target SSSG, the second information is used to indicate that the target SSSG is a specific SSSG; or,

in case that the first indication information is skipping PDCCH monitoring for the target time interval, the second information is used to indicate that the target time interval is a specific time period; or,

in case that the first indication information does not comprise a configuration of a default SSSG or an initial SSSG, the second information is used to indicate the default SSSG or the initial SSSG; or,

in case that the first indication information cannot indicate disabling PDCCH monitoring skipping, the second information is used to indicate disabling PDCCH monitoring skipping,

wherein the first indication information and the corresponding second information are used to determine the PDCCH monitoring adaptation behavior.

55. The network side apparatus of claim 54, further comprising a second determining module, used for: determining a configuration of the first indication information based on an association capability of a terminal device with respect to PDCCH monitoring adaptation or preference information of a terminal device configured in the second information.

56. The network side apparatus of claim 55, wherein a mode for determining the configuration of the first indication information based on the association capability of the terminal device with respect to PDCCH monitoring adaptation or the preference information of the terminal device configured in the second information comprises one or a combination of the following:

in case that the second information is only supporting PDCCH monitoring skipping, the first indication information is a behavior indication associated with PDCCH monitoring skipping; or,

in case that the second information is SSSG switching other than Rel-16 SSSG switching, the first indication information is a behavior indication associated with SSSG switching; or,

in case that the second information is supporting PDCCH monitoring skipping and Rel-16 SSSG switching, the first indication information is a joint indication for both PDCCH monitoring skipping and SSSG switching, wherein the Rel-16 SSSG switching comprises switching to or staying in SSSGO, and switching to or staying in SSSG 1.

57. The network side apparatus of claim 52, wherein transmitting the indication information for PDCCH monitoring adaptation comprising the first indication information comprises:

in case that the indication information for PDCCH monitoring adaptation also comprises second information, and PDCCH monitoring skipping associated information and/or SSSG switching associated information has been preconfigured, the preconfigured PDCCH monitoring skipping associated information and/or the SSSG switching associated information, the second information and the first indication information have the following corresponding relationships:

in case that the second information indicates the preconfigured PDCCH monitoring skipping associated information, the first indication information is in one-to-one correspondence with the preconfigured PDCCH monitoring skipping associated information; or,

in case that the second information indicates the preconfigured SSSG switching associated information, the first indication information is in one-to-one correspondence with the preconfigured SSSG switching associated information,

wherein the preconfigured PDCCH monitoring skipping associated information comprises: disabling PDCCH monitoring skipping and/or skipping PDCCH monitoring for a set of target time intervals; and

the preconfigured SSSG switching associated information comprises: not performing PDCCH monitoring in the SSSG and/or switching to or staying in a set of target SSSGs.

58. A processor-readable storage medium storing a computer program that, when executed by a processor, causes the processor to perform the method for determining a physical downlink control channel, PDCCH, monitoring adaptation behavior of any one of claims 1 to 13, or the method for determining a physical downlink control channel, PDCCH, monitoring adaptation behavior of any one of claims 14 to 19.

Receiving indication information for PDCCH monitoring adaptation transmitted from a network side device, where the indication information for PDCCH monitoring adaptation includes first indication information

101

Determining a PDCCH monitoring adaptation behavior based on the indication information for PDCCH monitoring adaptation

102

FIG. 1

Start

Transmitting indication information for PDCCH monitoring adaptation, where the indication information for PDCCH monitoring adaptation includes first indication information

201

FIG. 2

Terminal electronic device

300

Processor

320

Memory

Bus interface

310

Transciever

330

User interface

FIG. 3

Network side electronic device

Processor — 400

— 410

Bus interface

Transceiver

Memory — 420

FIG. 4

Receiving module — Determining module

501 502

FIG. 5

Transmitting module

601

FIG. 6

## INTERNATIONAL SEARCH REPORT

International application No.

**PCT/CN2022/119029**

### A.    CLASSIFICATION OF SUBJECT MATTER

H04L 5/00(2006.01)i;  H04W 52/02(2009.01)i

According to International Patent Classification (IPC) or to both national classification and IPC

### B.    FIELDS SEARCHED

Minimum documentation searched (classification system followed by classification symbols)

H04L5/-;  H04W52/-

Documentation searched other than minimum documentation to the extent that such documents are included in the fields searched

Electronic data base consulted during the international search (name of data base and, where practicable, search terms used)

CNTXT; CNABS; CNKI: 物理下行控制信道, PDCCH, 监听, 跳过, 指示, 开启, 激活, 关闭, 时间间隔, 时段, 时长, 搜索空间集, SSSG, 节能, 功耗; VEN; USTXT; EPTXT; WOTXT; 3GPP: PDCCH, monitor+, skip+, indicat+, instruct+, activit+, off, on, interval, period, duration, time, SSSG, Search Space Set, power sav+

### C.    DOCUMENTS CONSIDERED TO BE RELEVANT

| Category* | Citation of document, with indication, where appropriate, of the relevant passages | Relevant to claim No. |
|---|---|---|
| X | CATT. ""PDCCH monitoring adaptation ""<br>*3GPP TSG RAN WG1 #106-e, R1-2106986,* 07 August 2021 (2021-08-07),<br>    pp. 1-6, sections 2-6 | 1-58 |
| X | OPPO. ""DCI-based power saving adaptation solutions""<br>*3GPP TSG RAN WG1 #106-e, R1-2107255,* 07 August 2021 (2021-08-07),<br>    pp. 1-6, section 2 | 1-58 |
| X | CATT. ""PDCCH monitoring adaptation ""<br>*3GPP TSG RAN WG1 #105-e, R1- 2104535,* 12 May 2021 (2021-05-12),<br>    pp. 2-4, sections 2-4 | 1-58 |
| X | WO 2021098052 A1 (ZTE CORPORATION) 27 May 2021 (2021-05-27)<br>    description, p. 15, paragraph 2 to p. 28, paragraph 1 | 1-58 |
| A | CN 113300789 A (DATANG MOBILE COMMUNICATIONS EQUIPMENT CO., LTD.) 24 August 2021 (2021-08-24)<br>    entire document | 1-58 |

☑ Further documents are listed in the continuation of Box C.        ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **22 November 2022** | **15 December 2022** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2022/119029**

### C. DOCUMENTS CONSIDERED TO BE RELEVANT

| Category* | Citation of document, with indication, where appropriate, of the relevant passages | Relevant to claim No. |
|---|---|---|
| A | CN 111867021 A (DATANG MOBILE COMMUNICATIONS EQUIPMENT CO., LTD.) 30 October 2020 (2020-10-30) entire document | 1-58 |

Form PCT/ISA/210 (second sheet) (January 2015)

**INTERNATIONAL SEARCH REPORT**
Information on patent family members

International application No.

**PCT/CN2022/119029**

| Patent document cited in search report | | | Publication date (day/month/year) | Patent family member(s) | | | Publication date (day/month/year) |
|---|---|---|---|---|---|---|---|
| WO | 2021098052 | A1 | 27 May 2021 | None | | | |
| CN | 113300789 | A | 24 August 2021 | WO | 2021164409 | A1 | 26 August 2021 |
| | | | | TW | 202133657 | A | 01 September 2021 |
| CN | 111867021 | A | 30 October 2020 | WO | 2020220929 | A1 | 05 November 2020 |
| | | | | KR | 20220002535 | A | 06 January 2022 |
| | | | | EP | 3965478 | A1 | 09 March 2022 |
| | | | | EP | 3965478 | A4 | 08 June 2022 |
| | | | | US | 2022224486 | A1 | 14 July 2022 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111166069